(19) Europäisches Patentamt
European Patent Office
Office européen des brevets

(11) **EP 3 610 617 B1**

(12) **EUROPÄISCHE PATENTSCHRIFT**

(45) Veröffentlichungstag und Bekanntmachung des Hinweises auf die Patenterteilung:
**28.07.2021 Patentblatt 2021/30**

(21) Anmeldenummer: **18718110.2**

(22) Anmeldetag: **09.04.2018**

(51) Int Cl.:
*H04L 27/26* (2006.01)

(86) Internationale Anmeldenummer:
**PCT/EP2018/025099**

(87) Internationale Veröffentlichungsnummer:
**WO 2018/188809 (18.10.2018 Gazette 2018/42)**

(54) **SENDER UND EMPFÄNGER UND ENTSPRECHENDE VERFAHREN**

RECEIVER AND TRANSMITTER AND CORRESPONDING METHODS

RÉCEPTEUR ET ÉMETTEUR ET PROCÉDÉS CORRESPONDANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2017 DE 102017206259**

(43) Veröffentlichungstag der Anmeldung:
**19.02.2020 Patentblatt 2020/08**

(60) Teilanmeldung:
**21170876.3**

(73) Patentinhaber:
• **Fraunhofer-Gesellschaft zur Förderung der angewandten Forschung e.V.**
**80686 München (DE)**
• **Friedrich-Alexander-Universität Erlangen-Nürnberg**
**91054 Erlangen (DE)**

(72) Erfinder:
• **KNEIßL, Jakob**
**90765 Fürth (DE)**
• **KILIAN, Gerd**
**91056 Erlangen (DE)**
• **BERNHARD, Josef**
**92507 Nabburg (DE)**
• **ROBERT, Jörg**
**91058 Erlangen (DE)**
• **WECHSLER, Johannes**
**91174 Spalt (DE)**
• **ERETH, Stefan**
**90768 Fürth (DE)**
• **KOCH, Wolfgang**
**91220 Schnaittach (DE)**

(74) Vertreter: **Schlenker, Julian et al**
**Schoppe, Zimmermann, Stöckeler**
**Zinkler, Schenk & Partner mbB**
**Patentanwälte**
**Radlkoferstraße 2**
**81373 München (DE)**

(56) Entgegenhaltungen:
EP-A1- 2 914 039

• ZH H YU ET AL: "OFDM Timing and Frequency Offset Estimation Based on Repeated Training Sequence", WIRELESS COMMUNICATIONS, NETWORKING AND MOBILE COMPUTING, 2007. WICOM 2007. INTERNATIONAL CONFERENCE ON, IEEE, PISCATAWAY, NJ, USA, 21. September 2007 (2007-09-21), Seiten 264-266, XP031261247, ISBN: 978-1-4244-1311-9
• BYUNGJOON PARK ET AL: "A novel timing estimation method for OFDM systems", IEEE COMMUNICATIONS LETTERS, IEEE SERVICE CENTER, PISCATAWAY, NJ, US, Bd. 7, Nr. 5, 1. Mai 2003 (2003-05-01), Seiten 239-241, XP011423731, ISSN: 1089-7798, DOI: 10.1109/LCOMM.2003.812181
• WEIBING CHEN ET AL: "A Study of OFDM Synchronization Algorithm Based on Coaxial Cable Operating at Gigabit", INTELLIGENT SYSTEM DESIGN AND ENGINEERING APPLICATION (ISDEA), 2012 SECOND INTERNATIONAL CONFERENCE ON, IEEE, 6. Januar 2012 (2012-01-06), Seiten 143-146, XP032154975, DOI: 10.1109/ISDEA.2012.705 ISBN: 978-1-4577-2120-5

**Beschreibung**

Die Erfindung bezieht sich auf einen Sender sowie auf einen Empfänger und entsprechende Verfahren zum Senden von Signalen bzw. zum Synchronisieren eines Empfängers mit einem Sender.

Bei vielen Datenübertragungssystemen werden für die Signaldetektion bzw. die Parameterschätzung Pilotsequenzen (auch Trainingssequenzen oder Synchronisationssequenzen genannt) in die zu übertragenden Datenströme eingefügt. Dabei kann es sich sowohl um die Übertragung eines ununterbrochenen Datenstroms handeln, in den in gewissen Abständen Pilotsequenzen eingestreut werden, als auch um eine paketorientierte Übertragung, bei der üblicherweise jedes Paket (auch Telegramm genannt) genau eine Pilotsequenz enthält. Die Pilotsequenz wird auch Präambel bzw. Midambel genannt, wenn sie sich am Anfang bzw. in der Mitte des Pakets befindet. Eine Pilotsequenz kann aber auch innerhalb des Pakets in Form zweier oder mehrerer Teilsequenzen verteilt sein.

In manchen auf Funk basierenden Systemen mit asynchroner Paketübertragung sind die Sendepausen erheblich länger als die jeweilige Paketdauer. In einigen Systemen wird das Telegrammsplitting (siehe [4] und [1], DE 10 2011 082 098 A1) angewendet, bei dem jedes Paket in eine Anzahl von Teilpaketen - Fragmente oder Telegramm-Fragmente genannt - aufgeteilt wird. Dabei enthält jedes Fragment in der Regel eine eigene Pilotsequenz. Das Telegrammsplitting erweist sich als besonders robust in interferenzbegrenzten Systemen, in denen eine Vielzahl von Sendern unkoordiniert Telegramme aussenden, die von einem einzelnen Empfänger empfangen und dekodiert werden sollen. Dies geschieht z. B. in Telemetriesystemen, Sensornetzen oder Anwendungen unter dem Stichwort Internet of Things (IoT).

Die Demodulation von Daten eines funkbasierten Datenübertragungssystems erfordert eine Empfängersynchronisation bestehend aus:

- Zeitsynchronisation: Schätzung der genauen zeitlichen Lage des Pakets sowie des optimalen Abtastzeitpunktes.
- Frequenzsynchronisation: Schätzung und Korrektur der Frequenzablage zwischen Sende- und Empfangsoszillator also der Frequenzdifferenz zwischen der Trägerfrequenz des Sendesignals und der Mittenfrequenz des Empfangsfilters.
- Phasensynchronisation: Schätzung der Phase nach erfolgter Frequenzkorrektur (nur erforderlich bei kohärenter Demodulation).

Bei asynchroner Paketübertragung sind diese drei Arten der Synchronisation vor der Demodulation für jedes Paket unabhängig von den vorher empfangenen Paketen durchzuführen. Zu diesem Zweck beinhaltet jedes Paket eine Pilotsequenz, mit deren Hilfe die Anfangssynchronisation (sog. "initial acquisition") durchgeführt werden kann. Darüber hinaus kann während der Datendemodulation u. U. eine Nachführung (sog. "tracking") der Parameter erforderlich sein. Im Folgenden sei das Problem der Anfangssynchronisation betrachtet.

Das Telegrammsplitting bietet den Vorteil, dass Systeme insbesondere mit einer großen Anzahl unkoordinierter Sender robust gegen Paketkollisionen ist. Für das Telegrammsplitting sind jedoch im Bereich der Synchronisation und insbesondere der Frequenzsynchronisation keine Ansätze bekannt, die zu befriedigenden Ergebnissen führen.

In der Veröffentlichung [ZH h YU ET AL: "OFDM Timing and Frequency Offset Estimation Based on Repeated Training Sequence", WIRELESS COMMUNICATIONS; NETWORKING AND MOBILE COMPUTING; 2007. WICOM 2007. INTERNATIONAL CONFERENCE ON, IEEE, PISCATAWAY, NJ, USA, 21. September 2007] wird die Durchführung einer Frequenzoffsetkompensation basierend auf wiederholten Trainingssequenzen vorgeschlagen.

In der Veröffentlichung [BYUNGJOON PARK ET AL: "A novel timing estimation method for OFDM systems", IEEE COMMUNICATIONS LETTERS, IEEE SERVICE CENTER; PISCATAWAY, NJ, US, 1. Mai 2003] beschreibt eine Präambel, die empfängerseitig bei der Korrelation eine schärfere Korrelationsspitze liefert.

In der Veröffentlichung [WEIBING CHEN ET AL: "A Study of OFDM Synchronization Algorithm Based on Coaxial Cable Operating at Gigabit", INTELLIGENT SYSTEM DESIGN AND ENGINEERING APPLICATION (ISDEA), 2012, SECOND INTERNATIONAL CONFERENCE ON, IEEE, 6. Januar 2012] wird eine partielle Frequenz-Offset-Schätzung beschrieben.

In der EP 2 914 039 A1 wird eine Datensendeanordnung beschrieben, die Daten basierend auf dem Telegram-Splitting-Verfahren überträgt.

Die Aufgabe der Erfindung besteht darin, einen Sender und einen Empfänger vorzuschlagen, die insbesondere Telegrammsplitting verwenden und die im Hinblick auf die Synchronisation gegenüber dem Stand der Technik verbessert sind.

Die Erfindung löst die Aufgabe durch einen Sender gemäß Anspruch 1.

Der Sender verwendet somit Pilotsequenzen für eine verbesserte - und beispielsweise in einer Ausgestaltung auch fragmentierten - Phasenschätzung beim Auftreten von Zeitversätzen.

Ermittelt wird die Phase zwischen dem Sender (bzw. der Senderfrequenz) und dem Empfänger (bzw. der Empfangsfrequenz). Diese Phase wird beeinflusst durch den Zeitversatz, der sich aus einem Referenzzeitpunkt der Aussendung eines Signals und einen dafür bei der Auswertung angenommenen bzw. geschätzten Wert bezieht. So ist der Referenzzeitpunkt z. B. der Zeitpunkt, zu dem ein Signal oder ein Pilotsymbol einer Pilotsequenz des Signals ausgesendet wird. Wird bei der Auswertung der Pilotsequenz ein falscher Wert (Referenzzeitpunkt) angenommen bzw. geschätzt, so wirkt sich dies direkt auf die Bestimmung der Phase aus. Daher sendet der Sender Signale mit Pilotsequenzen aus, deren Symbole beim Auftreten eines Zeitversatzes solche Phasenfehler - als Fehler bei der Ermittlung der Phase - erzeugen, die sich im Mittel über die pro Symbol ermittelten Phasenwerte im Wesentlichen kompensieren.

Weiterhin löst die Erfindung die Aufgabe durch ein Verfahren zum Aussenden von Signalen gemäß Anspruch 7.

Die folgenden Ausgestaltungen beziehen sich darauf, dass der Sender mehrere Signale aussendet, die jeweils eine Teil-Pilotsequenz aufweisen. Für die Bestimmung der Phase zwischen Sender und Empfänger werden für die einzelnen Signale jeweils einzelne Phasenwerte bestimmt und die einzelnen Phasenwerte werden anschließend über die Signale hinweg gemittelt. Daher kompensieren sich beispielsweise die Phasenfehler nicht innerhalb eines Signals, sondern erst über die Auswertung über (vorzugweise alle) empfangenen Signale Die Signale sind daher beispielsweise in einer Ausgestaltung Telegramm-Fragmente, die keine vollständige Pilotsequenz, sondern nur Teil-Pilotsequenzen aufweisen, die sich zu der vollständigen Pilotsequenz ergänzen. Eine Schätzung über mehrere Teil-Pilotsequenzen hinweg ist vorzugsweise nur dann anzuwenden, wenn die einzelnen Teil-Pilotsequenzen kohärent ausgesendet worden sind und auch am Empfänger noch kohärent empfangen werden konnten.

Daher bezieht sich die Erfindung gemäß einer ergänzenden oder alternativen Ausgestaltung auf einen Sender gemäß Anspruch 5.

Im Gegensatz zu den vorhergehenden Ausgestaltungen kompensieren sich die Phasenfehler in dieser Ausgestaltung somit bei der Auswertung über mehrere Signale hinweg.

Die Ausgestaltungen gemäß Anspruch 5 und den entsprechenden abhängigen Ansprüchen beziehen sich somit gleichsam auf eine Erweiterung der Mittelung bezüglich der Phase bei einem Pilotsequenz-Splitting.

Wird die Pilotsequenz in mehrere Teilbereiche unterteilt, so ergibt sich eine verbesserte Performance in der Frequenzschätzung, da die Differenz zwischen den Teil-Pilotsequenzen ebenfalls zur Frequenzschätzung verwendet werden kann, wenn die Kohärenz zwischen den Teil-Pilotsequenzen gegeben ist.

Wird pro Signal die gleiche Anzahl an Symbolen der Teil-Pilotsequenzen versendet, so verringert sich die Länge der Teil-Pilotsequenzen in Relation zur gesamten Pilotsequenz um den Faktor der Anzahl an gesplitteten Pilotsequenzen.

In einer Ausgestaltung ist die Kohärenz zwischen den Teil- Pilotsequenzen gegeben. Insgesamt sind die Teil-Pilotsequenzen so definiert, dass die Summe der Phasenfehler bei Zeitverschiebung über mehrere Teil-Pilotsequenzen hinweg minimiert wird.

Der Empfänger ermittelt daher die Phase nicht nur aus einem Signal, sondern aus mehreren Signalen.

Eine entsprechende alternative Ausgestaltung eines Verfahrens ist im Anspruch 9 dargestellt.

In der Anmeldung wird beispielsweise auch ein Empfänger beschrieben.

Der Empfänger ist dabei in einer Ausgestaltung insbesondere unabhängig von der Ausgestaltung des Senders und insbesondere nicht bezogen auf einen Sender, dessen Ausgestaltungen vorangehend beschrieben worden sind. In alternativen Ausgestaltungen ist der Empfänger abhängig von der Art der Signalaussendung durch den Sender, sodass Empfänger und Sender ein System zur Daten- oder Informationskommunikation bilden.

Der Empfänger ist derartig ausgestaltet, mindestens ein von einem Sender ausgesendetes Signal zu empfangen. Der Empfänger weist eine Synchronisationsvorrichtung auf. Die Synchronisationsvorrichtung ist derartig ausgestaltet, ausgehend von dem empfangenen Signal eine Synchronisation des Empfängers mit dem Sender vorzunehmen. Der Empfänger weist eine Signalauswertevorrichtung auf, wobei die Signalauswertevorrichtung aus dem empfangenen Signal Daten für die Synchronisation ermittelt und an die Synchronisationsvorrichtung für die Synchronisation übergibt.

Eine Ausgestaltung des Empfänger sieht vor, dass die Synchronisationsvorrichtung derartig ausgestaltet ist, ausgehend von einer Pilotsequenz oder einer Teil-Pilotsequenz des empfangenen Signals eine Synchronisation des Empfängers mit dem Sender vorzunehmen.

Bei einer Ausgestaltung ermittelt die Signalauswertevorrichtung basierend auf Symbolen der Pilotsequenz bzw. der Teil-Pilotsequenz und basierend auf Symbolen einer bekannten Referenzsequenz bzw. eines Teils einer bekannten Referenzsequenz mehrere (also mindestens zwei) Werte für eine Phase zwischen einer Pilotsequenz bzw. einer Teil-Pilotsequenz des vom Sender gesendeten Signals und des in Folge der Aussendung des Signals vom Empfänger empfangenen Signals. Die Signalauswertevorrichtung ermittelt ausgehend von den Werten für die Phase einen Gesamtwert für die Phase und übergibt den Gesamtwert an die Synchronisationsvorrichtung für die Synchronisation.

Eine Ausgestaltung des Empfänger sieht vor, dass die Signalauswertevorrichtung die Werte für die Phasen mittelt, um den Gesamtwert für die Phase zu ermitteln.

Bei einer Ausgestaltung empfängt der Empfänger mehrere von dem Sender ausgesendete Signale. Die Signalauswertevorrichtung ermittelt ausgehend von jedem empfangenen Signal Daten für die Synchronisation. Die Synchronisationsvorrichtung verwendet die von den empfangenen Signalen ermittelten Daten gemeinsam für die Synchronisation.

Eine Ausgestaltung des Empfänger sieht vor, dass der Empfänger mehrere von dem Sender ausgesendete Signale empfängt, die jeweils eine Teil-Pilotsequenz aufweisen. Die Teil-Pilotsequenzen ergänzen sich zu einer Pilotsequenz. Die Signalauswertevorrichtung ermittelt Daten für die Synchronisation basierend auf jeder Teil-Pilotsequenz separat für jede Teil-Pilotsequenz.

Bei einer Ausgestaltung empfängt der Empfänger mehrere von dem Sender ausgesendete Signale, die jeweils eine Teil-Pilotsequenz aufweisen. Die Teil-Pilotsequenzen ergänzen sich zu einer Pilotsequenz. Die Signalauswertevorrichtung führt die Teil-Pilotsequenzen zusammen und ermittelt anschließend Daten für die Synchronisation basierend auf den zusammengeführten Teil-Pilotsequenzen.

Eine Ausgestaltung des Empfänger sieht vor, dass die Signalauswertevorrichtung bei der Auswertung einer Pilotsequenz eines empfangenen Signals die Pilotsequenz in mindestens zwei Teil-Pilotsequenzen trennt und Daten für die Synchronisation für jede der mindestens zwei Teil-Pilotsequenzen separat ermittelt.

Bei einer Ausgestaltung ermittelt die Signalauswertevorrichtung bei der Auswertung einer Pilotsequenz eines empfangenen Signals einen Zeitversatz zwischen einem Referenz-Zeitpunkt einer Aussendung des Signals durch den Sender und einem für die Auswertung für den Referenz-Zeitpunkt angenommenen und/oder geschätzten Wert. Dabei greift die Signalauswertevorrichtung für die weitere Auswertung der Pilotsequenz auf Symbole einer an den Zeitversatz angepassten Referenzsequenz zu.

Eine Ausgestaltung des Empfänger sieht vor, dass die Signalauswertevorrichtung bei der Auswertung einer Teil-Pilotsequenz eines empfangenen Signals einen Zeitversatz zwischen einem Referenz-Zeitpunkt einer Aussendung des Signals durch den Sender und einem für die Auswertung für den Referenz-Zeitpunkt angenommenen und/oder geschätzten Wert ermittelt. Die Signalauswertevorrichtung greift für die weitere Auswertung der Teil-Pilotsequenz auf Symbole eines Teils einer an den Zeitversatz angepassten Referenzsequenz oder eines an den Zeitversatz angepassten Teils einer Referenzsequenz zu.

Bei einer Ausgestaltung nimmt die Signalauswertevorrichtung die Anpassung der Referenzsequenz oder des Teils der Referenzsequenz vor, indem die Signalauswertevorrichtung eine bekannte Referenzsequenz oder einen Teil einer bekannten Referenzsequenz zeitlich um den ermittelten Zeitversatz verschiebt.

Eine Ausgestaltung des Empfänger sieht vor, dass die Signalauswertevorrichtung die Anpassung der Referenzsequenz oder des Teils der Referenzsequenz vornimmt, indem die Signalauswertevorrichtung auf einen Datenspeicher mit entsprechend hinterlegen Referenzsequenzen oder Teilen von Referenzsequenzen zugreift.

Bei einer Ausgestaltung weist der Empfänger eine Filtervorrichtung und eine Abtastvorrichtung auf.

Eine Ausgestaltung bezieht sich somit auf eine Korrektur der Referenzsymbole bzw. der Referenzsequenz für die Auswertung der empfangenen Signale.

Die Anpassung der Referenzsequenz ist beispielsweise vorteilhaft für den Fall, dass eine Überabtastung der empfangenen Signale sehr klein ist. Zudem kann der Zeitversatz beispielsweise durch Interpolation weitaus genauer abgeschätzt werden, als dies für eine Korrektur z. B. durch Einwirkung durch den Filter möglich ist.

Daher werden die Referenzsymbole der für das jeweilige empfangene Signal zugehörigen Referenzsequenz um den ermittelten Wert der Zeitverschiebung verschoben. Die korrigierten bzw. an den Zeitversatz angepassten Referenzsymbole werden dann zur Schätzung des Phasenfehlers verwendet. Somit lässt sich der zeitliche Versatz der Symbole in der Schätzung nahezu komplett unterdrücken. Die angepassten Referenzsequenzen werden daher abhängig vom ermittelten bzw beispielsweise geschätzten Zeitversatz berechnet oder einem Datenspeicher, z. B. einer Look-Up-Tabelle entnommen

Weiterhin umfasst die Beschreibung beispielsweise ein Verfahren zum Synchronisieren von einem Empfänger mit einem Sender. Das Synchronisierungsverfahren ist in einer Ausgestaltung ein Teil eines Verfahrens zum Empfangen von Signalen, die von einem Sender ausgesendet und mit einem Empfänger empfangen werden. Das Verfahren umfasst grundlegend das Empfangen von mindestens einem Signal von dem Sender, das Auswerten des Signals, um Synchronisierungsdaten zu erhalten und das Synchronisieren des Empfängers unter Verwendung der Synchronisierungsdaten.

Das Verfahren umfasst dabei in einer Ausgestaltung zumindest die folgenden Schritte:

- Mindestens ein von dem Sender ausgesendetes Signal wird von dem Empfänger empfangen.
- Ausgehend von einer Pilotsequenz oder einer Teil-Pilotsequenz des empfangenen Signals wird eine Synchronisation des Empfängers mit dem Sender vorgenommen.

Eine Ausgestaltung sieht vor, dass basierend auf Symbolen der Pilotsequenz bzw. der Teil-Pilotsequenz des ausgesendeten Signals und eines in Folge der Aussendung des Signals vom Empfänger empfangenen Signals mehrere Werte für eine Phase zwischen einer Pilotsequenz bzw. einer Teil-Pilotsequenz des vom Sender ausgesendeten Signals und des in Folge der Aussendung des Signals vom Empfänger empfangenen Signals ermittelt werden, und dass ausgehend von den Werten für die Phase ein Gesamtwert für die Phase ermittelt und für die Synchronisation verwendet wird.

In einer Ausgestaltung ist vorgesehen, dass mehrere ausgesendete Signale empfangen werden, dass von jedem empfangenen Signal Daten für die Synchronisation ermittelt werden, und dass die ermittelten Daten zusammen für die Synchronisation verwendet werden.

Eine Ausgestaltung sieht vor, dass ein Zeitversatz zwischen einem Referenz-Zeitpunkt einer Aussendung des Signals durch den Sender und einem für den Referenz-Zeitpunkt angenommenen und/oder geschätzten Wert ermittelt wird, und dass eine Pilotsequenz des empfangenen Signals mit Symbolen einer an den Zeitversatz angepassten Referenzsequenz ausgewertet wird.

In einer Ausgestaltung ist vorgesehen, dass ein Zeitversatz zwischen einem Referenz-Zeitpunkt einer Aussendung des Signals durch den Sender und einem für den Referenz-Zeitpunkt angenommenen und/oder geschätzten Wert ermittelt wird, und dass eine Teil-Pilotsequenz des empfangenen Signals mit Symbolen eines Teils einer an den Zeitversatz angepassten Referenzsequenz oder mit Symbolen eines an den Zeitversatz angepassten Teils einer Referenzsequenz ausgewertet wird.

Die obigen Ausgestaltungen des Empfängers lassen sich durch Schritte von entsprechenden Ausgestaltungen des Verfahrens realisieren, sodass hier auf eine Wiederholung der Ausführungen verzichtet sei.

Die folgenden Ausgestaltungen eines Empfängers beziehen sich auf das DFT-Verfahren zur Ermittlung der Daten für die Synchronisation des Empfängers mit dem Sender. Dabei ergänzenden die folgenden Ausgestaltungen zumindest teilweise die vorangehenden Ausgestaltungen oder stellen unabhängige Alternativen dar.

Eine Ausgestaltung des Empfängers sieht vor, dass der Empfänger derartig ausgestaltet ist, mehrere von dem Sender ausgesendete Telegramm-Fragmente zu empfangen, wobei die Telegramm-Fragmente jeweils eine Teil-Pilotsequenz aufweisen, wobei die Telegramm-Fragmente sich zu einem Telegramm ergänzen, das von dem Sender gesendete Daten beinhaltet und wobei die Telegramm-Fragmente kürzer sind als ein einzelnes die gesendeten Daten aufweisendes Telegramm. Zudem ergänzen sich die Teil-Pilotsequenzen zu einer Pilotsequenz. Die Signalauswertevorrichtung ermittelt ausgehend von den Teil-Pilotsequenzen und unter Anwendung des DFT-Verfahrens einen Wert für eine Frequenzdifferenz zwischen einer Sendefrequenz des Senders und einer Empfangsfrequenz des Empfängers. Diese Ermittlung erfolgt, indem die Signalauswertevorrichtung für jede Teil-Pilotsequenz Werte von Entscheidungsvariablen ermittelt, indem die Signalauswertevorrichtung die ermittelten Werte der Entscheidungsvariablen über die Teil-Pilotsequenzen miteinander kombiniert und mit den kombinierten Werten eine Bestimmung eines Maximum-Werts durchführt. Optional erfolgt auch ein Vergleich des Maximum-Werts mit einer Entscheidungsschwelle

In einer Ausgestaltung ist vorgesehen, dass die Signalauswertevorrichtung für jede Teil-Pilotsequenz die Werte der Entscheidungsvariablen ermittelt, indem die Signalauswertevorrichtung für eine Mehrzahl von als Frequenzhypothesen bezeichneten Frequenzen einer komplexen Exponentialschwingung Multiplikationswerte einer Multiplikation von Abtastwerten der jeweiligen Teil-Pilotsequenz mit konjugiert komplexen Werten einer gleichen Anzahl von Referenzsymbolen einer bekannten Referenzsequenz und mit Abtastwerten der komplexen Exponentialschwingung bildet und die Multiplikationswerte aufsummiert.

Gemäß einer Ausgestaltung kombiniert die Signalauswertevorrichtung die für die Teil-Pilotsequenzen ermittelten Werte der Entscheidungsvariablen zusammen (also gemeinsam über die Teil-Pilotsequenzen) für die Teil-Pilotsequenzen miteinander, indem die Signalauswertevorrichtung die Beträge der Werte der Entscheidungsvariablen addiert.

In einer Ausgestaltung ist vorgesehen, dass die Signalauswertevorrichtung die für die Teil-Pilotsequenzen ermittelten Werte der Entscheidungsvariablen zusammen für die Teil-Pilotsequenzen miteinander kombiniert, indem die Signalauswertevorrichtung eine Summe der Beträge eines Realteils und eines Imaginärteils der Werte der Entscheidungsvariablen bildet.

Gemäß einer Ausgestaltung kombiniert die Signalauswertevorrichtung die für die Teil-Pilotsequenzen ermittelten Werte der Entscheidungsvariablen zusammen für die Teil-Pilotsequenzen miteinander, indem die Signalauswertevorrichtung die Betragsquadrate der Werte der Entscheidungsvariablen aufsummiert.

In einer Ausgestaltung ist vorgesehen, dass die Signalauswertevorrichtung die für die Teil-Pilotsequenzen ermittelten Werte der Entscheidungsvariablen zusammen für die Teil-Pilotsequenzen kohärent unter Beachtung von Betrag und Phase der Werte der Entscheidungsvariablen miteinander kombiniert.

Gemäß einer Ausgestaltung kombiniert die Signalauswertevorrichtung die ermittelten Werte der Entscheidungsvariablen unter Einbeziehung von Gewichtungsfaktoren miteinander.

In einer Ausgestaltung ist vorgesehen, dass die Signalauswertevorrichtung die ermittelten Werte der Entscheidungsvariablen unter Einbeziehung von sich jeweils auf die Teil-Pilotsequenzen beziehende Gewichtungsfaktoren miteinander kombiniert.

Gemäß einer Ausgestaltung ermittelt die Signalauswertevorrichtung die Gewichtungsfaktoren ausgehend von einem Signal-zu-Rauschen-Verhältnis des jeweiligen Telegramm-Fragments

In einer Ausgestaltung ist vorgesehen, dass die Signalauswertevorrichtung die Gewichtungsfaktoren als proportional zu einer Wurzel aus dem Signal-zu-Rauschen-Verhältnis ermittelt.

Gemäß einer Ausgestaltung ermittelt die Signalauswertevorrichtung die Gewichtungsfaktoren als proportional zu einer Wurzel aus einem Quotienten aus dem Signal-zu-Rauschen-Verhältnis und einer Rauschleistung des jeweiligen Telegramm-Fragments ermittelt.

In einer Ausgestaltung ist vorgesehen, dass die Signalauswertevorrichtung die Gewichtungsfaktoren in Abhängigkeit von einer der Signalauswertevorrichtung zur Verfügung stehenden Rechenleistung oder in Abhängigkeit von einem Verhältnis des Signal-zu-Rausch-Verhältnisses relativ zu einem vorgebbaren Relationswert oder in Abhängigkeit von einer Störleistung entweder als proportional zu einer Wurzel aus dem Signal-zu-Rausch-Verhältnis oder als proportional zu einer Wurzel aus einem Quotienten aus dem Signal-zu-Rausch-Verhältnis und einer Rauschleistung des jeweiligen Telegramm-Fragments ermittelt.

Gemäß einer Ausgestaltung ist der Empfänger derartig ausgestaltet, mehrere von dem Sender ausgesendete Telegramm-Fragmente zu empfangen, wobei die Telegramm-Fragmente jeweils eine Teil-Pilotsequenz aufweisen, wobei die Telegramm-Fragmente sich zu einem Telegramm ergänzen, das von dem Sender gesendete Daten beinhaltet, wobei die Telegramm-Fragmente kürzer sind als ein einzelnes die gesendeten Daten aufweisendes Telegramm und wobei die Teil-Pilotsequenzen sich zu einer Pilotsequenz ergänzen. Die Signalauswertevorrichtung ermittelt ausgehend von den Teil-Pilotsequenzen und unter Anwendung des DFT-Verfahrens einen Wert für eine Frequenzdifferenz zwischen einer Sendefrequenz des Senders und einer Empfangsfrequenz des Empfängers, indem die Signalauswertevorrichtung für jede Teil-Pilotsequenz Werte von Entscheidungsvariablen ermittelt, die ermittelten Werte der Entscheidungsvariablen über die Teil-Pilotsequenzen miteinander kombiniert und mit den kombinierten Werten eine Bestimmung eines Maximum-Werts durchführt. Dabei führt die Signalauswertevorrichtung eine Zeitschätzung für einen Zeitversatz zwischen einem Referenz-Zeitpunkt einer Aussendung des Telegramm-Fragments und einem für die Auswertung des Telegramm-Fragments für den Referenz-Zeitpunkt angenommenen und/oder geschätzten Wert durch, indem die Signalauswertevorrichtung ausgehend von einem durch die Bestimmung des Maximum-Werts erhaltenen Maximalwert und mindestens einem hinsichtlich einer Zeitvariable zum Maximalwert benachbarten Wert einen Zeit-Schätzwert für einen Zeitversatz ermittelt.

In einer Ausgestaltung ist vorgesehen, dass der Empfänger derartig ausgestaltet ist, mindestens ein von dem Sender ausgesendetes Telegramm zu empfangen, wobei das Telegramm eine Pilotsequenz aufweist. Die Signalauswertevorrichtung ermittelt ausgehend von der Pilotsequenz und unter Anwendung des DFT-Verfahrens einen Wert für eine Frequenzdifferenz zwischen einer Sendefrequenz des Senders und einer Empfangsfrequenz des Empfängers, indem die Signalauswertevorrichtung für die Pilotsequenz Werte von Entscheidungsvariablen ermittelt, eine Bestimmung eines Maximum-Werts durchführt. Dabei führt die Signalauswertevorrichtung eine Zeitschätzung für einen Zeitversatz zwischen einem Referenz-Zeitpunkt einer Aussendung des Telegramms und einem für die Auswertung des Telegramms für den Referenz-Zeitpunkt angenommenen und/oder geschätzten Wert durch, indem die Signalauswertevorrichtung ausgehend von einem durch die Bestimmung des Maximum-Werts erhaltenen Maximalwert und mindestens einem hinsichtlich einer Zeitvariable zum Maximalwert benachbarten Wert einen Zeit-Schätzwert für einen Zeitversatz ermittelt.

Gemäß einer Ausgestaltung erhält die Signalauswertevorrichtung ausgehend von dem durch die Bestimmung des Maximum-Werts und einem positiven Vergleich des Maximums-Werts mit einer Entscheidungsschwelle den Maximalwert.

In einer Ausgestaltung ist vorgesehen, dass die Signalauswertevorrichtung den Zeit-Schätzwert aus dem Maximalwert und zwei benachbarten Werten erzeugt, und dass die zwei benachbarten Werte hinsichtlich der Zeitvariable dem ermittelten Maximalwert vorangehen bzw. folgen.

Gemäß einer Ausgestaltung ermittelt die Signalauswertevorrichtung für den Maximalwert und die zwei benachbarten Werte ein Polynom. Zudem ermittelt die Signalauswertevorrichtung aus einem dem Polynom zugehörigen Extremwert den Zeit-Schätzwert.

Eine Ausgestaltung besteht darin, dass die Signalauswertevorrichtung die Interpolation mit einem Polynom zweiten Grades vornimmt.

Gemäß einer Ausgestaltung nimmt die Signalauswertevorrichtung (12) die Interpolation mit einem Polynom folgender Form vor: $y(x) = y_0 - c(x-x_0)^2$, wobei die freien Parameter $y_0$, $c$ und $x_0$ anhand des Maximalwerts und der benachbarten Werte ermittelt sind.

Einen maximalen Wert der Interpolationskurve ermittelt die Transformationsvorrichtung mit folgender Funktion:

$$x_0 = \frac{1}{2} \frac{y(1) - y(-1)}{2y(0) - y(1) - y(-1)},$$ wobei $x_0$ ein Abszissenwert eines Maximums des Polynoms, $y(0)$ der Maximalwert und $y(-1)$ sowie $y(1)$ die benachbarten Werte sind

Als Interpolationsfunktion wird in einer Ausgestaltung ein Polynom zweiten Grades der Form $y(x) = y_0 - c(x-x_0)^2$ verwendet.

Der Abszissenwert $x_0$ des Polynommaximums stellt beispielsweise den verbesserten Zeit-schätzwert dar (normiert auf das Abtastintervall T/N).

Aus dem Abszissenwert $x_0$ des Polynommaximums lässt sich der verbesserte Frequenz-schätzwert über

$$\hat{v}T = \frac{i_0 + x_0}{N_{FFT}} - \begin{cases} 0 & \text{für } i_0 < N_{FFT}/2 \\ 1 & \text{für } i_0 \geq N_{FFT}/2 \end{cases}$$

berechnen.

In einer Ausgestaltung ist vorgesehen, dass der Empfänger derartig ausgestaltet ist, mehrere von dem Sender ausgesendete Telegramm-Fragmente zu empfangen, wobei die Telegramm-Fragmente jeweils eine Teil-Pilotsequenz aufweisen, wobei die Telegramm-Fragmente sich zu einem Telegramm ergänzen, das von dem Sender gesendete Daten beinhaltet, wobei die Telegramm-Fragmente kürzer sind als ein einzelnes die gesendeten Daten aufweisendes Telegramm und wobei die Teil-Pilotsequenzen sich zu einer Pilotsequenz ergänzen.

Die Signalauswertevorrichtung ermittelt ausgehend von den Teil-Pilotsequenzen und unter Anwendung des DFT-Verfahrens einen Wert für eine Frequenzdifferenz zwischen einer Sendefrequenz des Senders und einer Empfangsfrequenz des Empfängers. Dies geschieht, indem die Signalauswertevorrichtung für jede Teil-Pilotsequenz Werte von Entscheidungsvariablen ermittelt, die ermittelten Werte der Entscheidungsvariablen über die Teil-Pilotsequenzen miteinander kombiniert und mit den kombinierten Werten eine Bestimmung eines Maximum-Werts durchführt.

Die Signalauswertevorrichtung führt eine Frequenzschätzung für die Frequenzdifferenz durch, indem die Signalauswertevorrichtung ausgehend von einem durch die Bestimmung des Maximum-Werts erhaltenen Maximalwert und mindestens einem hinsichtlich einer Frequenzvariable zum Maximalwert benachbarten Wert einen Frequenz-Schätzwert ermittelt.

Gemäß einer Ausgestaltung ist der Empfänger derartig ausgestaltet, mindestens ein von dem Sender ausgesendetes Telegramm zu empfangen, wobei das Telegramm eine Pilotsequenz aufweist. Die Signalauswertevorrichtung ermittelt ausgehend von der Pilotsequenz und unter Anwendung des DFT-Verfahrens einen Wert für eine Frequenzdifferenz zwischen einer Sendefrequenz des Senders und einer Empfangsfrequenz des Empfängers, indem die Signalauswertevorrichtung für die Pilotsequenz Werte von Entscheidungsvariablen ermittelt, eine Bestimmung eines Maximum-Werts durchführt. Die Signalauswertevorrichtung ermittelt eine Frequenzschätzung für die Frequenzdifferenz durchführt, indem die Signalauswertevorrichtung ausgehend von einem durch die Bestimmung des Maximum-Werts erhaltenen Maximalwert und mindestens einem hinsichtlich einer Frequenzvariable zum Maximalwert benachbarten Wert einen Frequenz-Schätzwert.

In einer Ausgestaltung ist vorgesehen, dass die Signalauswertevorrichtung den Maximalwert ausgehend von dem Maximum-Wert und einem positiven Vergleich des Maximum-Werts mit einer Entscheidungsschwelle erhält.

Gemäß einer Ausgestaltung erzeugt die Signalauswertevorrichtung den Frequenz-Schätzwert aus dem Maximalwert und zwei benachbarten Werten, wobei die zwei benachbarten Werte hinsichtlich der Frequenzvariable dem ermittelten Maximalwert vorangehen bzw folgen.

In einer Ausgestaltung ist vorgesehen, dass die Signalauswertevorrichtung für den Maximalwert und die zwei benachbarten Werte ein Polynom ermittelt, und dass die Signalauswertevorrichtung aus einem dem Polynom zugehörigen Extremwert den Frequenz-Schätzwert ermittelt.

Eine Ausgestaltung besteht darin, dass die Signalauswertevorrichtung die Interpolation mit einem Polynom zweiten Grades vornimmt.

Gemäß einer Ausgestaltung nimmt die Signalauswertevorrichtung (12) die Interpolation mit einem Polynom folgender Form vor: $y(x) = y_0 - c(x-x_0)^2$, wobei die freien Parameter $y_0$, $c$ und $x_0$ anhand des Maximalwerts und der benachbarten Werte ermittelt sind.

Einen maximalen Wert der Interpolationskurve ermittelt die Transformationsvorrichtung mit folgender Funktion:

$$x_0 = \frac{1}{2} \frac{y(1) - y(-1)}{2y(0) - y(1) - y(-1)},$$ wobei $x_0$ ein Abszissenwert eines Maximums des Polynoms, $y(0)$ der Maximalwert und $y(-1)$ sowie $y(1)$ die benachbarten Werte sind

Als Interpolationsfunktion wird in einer Ausgestaltung ein Polynom zweiten Grades der Form $y(x) = y_0 - c(x-x_0)^2$ verwendet.

Der Abszissenwert $x_0$ des Polynommaximums stellt beispielsweise den verbesserten Zeit-schätzwert dar (normiert auf das Abtastintervall T/N).

Aus dem Abszissenwert $x_0$ des Polynommaximums lässt sich der verbesserte Frequenz-schätzwert über

$$\hat{v}T = \frac{i_0 + x_0}{N_{FFT}} - \begin{cases} 0 & \text{für } i_0 < N_{FFT}/2 \\ 1 & \text{für } i_0 \geq N_{FFT}/2 \end{cases}$$

berechnen.

Gemäß einer Ausgestaltung ermittelt die Signalauswertevorrichtung den Zeit-Schätzwert und verwendet ihn für eine erneute Ermittlung der Frequenzdifferenz, indem die Signalauswertevorrichtung bei einer erneuten Ermittlung der Werte der Entscheidungsvariablen um den Zeit-Schätzwert verschobene Abtastwerte der jeweiligen Teil-Pilotsequenzen verwendet oder Referenzsymbole einer Referenzsequenz um den Zeit-Schätzwert zeitlich verschiebt.

In einer Ausgestaltung ist vorgesehen, dass die Signalauswertevorrichtung für die erneute Ermittlung der Frequenzdifferenz eine Interpolation der Abtastwerte der jeweiligen Teil-Pilotsequenzen vornimmt.

Gemäß einer Ausgestaltung führt die Signalauswertevorrichtung nach der erneuten Ermittlung der Frequenzdifferenz eine Frequenzschätzung für die Frequenzdifferenz durch, indem die Signalauswertevorrichtung ausgehend von einem durch die Bestimmung des Maximum-Werts und einem positiven Vergleich mit der Entscheidungsschwelle erhaltenen Maximalwert und mindestens einem hinsichtlich einer Frequenzvariable benachbarten Wert einen Frequenz-Schätzwert ermittelt.

Die vorgenannten Ausgestaltungen des Empfängers lassen sich auch auf das Verfahren zum Synchronisieren - ggf. als Teil eines Verfahrens zum Empfangen von Signalen - realisieren.

Eine Ausgestaltung des Verfahrens, das ergänzend oder alternativ zu den vorgenannten Ausgestaltungen ist, sieht vor,

- dass durch den Empfänger mehrere von dem Sender ausgesendete Telegramm-Fragmente empfangen werden,

  ○ wobei die Telegramm-Fragmente jeweils eine Teil-Pilotsequenz aufweisen,
  ○ wobei die Telegramm-Fragmente sich zu einem Telegramm ergänzen, das von dem Sender ausgesendete Daten beinhaltet,
  ○ wobei die Telegramm-Fragmente kürzer als das Telegramm sind,
  ○ wobei die Teil-Pilotsequenzen sich zu einer Pilotsequenz ergänzen,

- dass ausgehend von den Teil-Pilotsequenzen der Empfänger mit dem Sender synchronisiert wird,
  ○ wobei ausgehend von den Teil-Pilotsequenzen und unter Anwendung des DFT-Verfahrens ein Wert für eine Frequenzdifferenz zwischen einer Sendefrequenz des Senders und einer Empfangsfrequenz des Empfängers ermittelt wird,

    ▪ indem für jede Teil-Pilotsequenz Werte von Entscheidungsvariablen ermittelt werden,
    ▪ indem die ermittelten Werte der Entscheidungsvariablen über alle Teil-Pilotsequenzen miteinander kombiniert werden und
    ▪ indem mit den kombinierten Werten eine Bestimmung eines Maximum-Werts durchführt wird.

Eine Ausgestaltung sieht vor, dass durch den Empfänger mehrere von dem Sender ausgesendete Telegramm-Fragmente empfangen werden, wobei die Telegramm-Fragmente jeweils eine Teil-Pilotsequenz aufweisen, wobei die Telegramm-Fragmente sich zu einem Telegramm ergänzen, das von dem Sender ausgesendete Daten beinhaltet, wobei die Telegramm-Fragmente kürzer als das Telegramm sind, wobei die Teil-Pilotsequenzen sich zu einer Pilotsequenz ergänzen.

Ausgehend von den Teil-Pilotsequenzen wird der Empfänger mit dem Sender synchronisiert. Ausgehend von den Teil-Pilotsequenzen und unter Anwendung des DFT-Verfahrens wird ein Wert für eine Frequenzdifferenz zwischen einer Sendefrequenz des Senders und einer Empfangsfrequenz des Empfängers ermittelt, indem für jede Teil-Pilotsequenz Werte von Entscheidungsvariablen ermittelt werden, indem die ermittelten Werte der Entscheidungsvariablen über alle Teil-Pilotsequenzen miteinander kombiniert werden und indem mit den kombinierten Werten eine Bestimmung eines Maximum-Werts durchgeführt wird. Eine Zeitschätzung für einen Zeitversatz zwischen einem Referenz-Zeitpunkt einer Aussendung des Telegramm-Fragments und einem für die Auswertung des Telegramm-Fragments für den Referenz-Zeitpunkt angenommenen und/oder geschätzten Wert wird durchführt, indem die Signalauswertevorrichtung ausgehend von einem durch die Bestimmung des Maximum-Werts erhaltenen Maximalwert und mindestens einem hinsichtlich einer Zeitvariable zum Maximalwert benachbarten Wert einen Zeit-Schätzwert für einen Zeitversatz ermittelt.

Eine Ausgestaltung besteht darin, dass durch den Empfänger mindestens ein von dem Sender ausgesendetes Telegramm empfangen wird, wobei das Telegramm eine Pilotsequenz aufweist, wobei ausgehend von der Pilotsequenz der Empfänger mit dem Sender synchronisiert wird, wobei ausgehend von der Pilotsequenz und unter Anwendung des DFT-Verfahrens ein Wert für eine Frequenzdifferenz zwischen einer Sendefrequenz des Senders und einer Empfangsfrequenz des Empfängers ermittelt wird, indem für die Pilotsequenz Werte von Entscheidungsvariablen ermittelt werden, indem mit den ermittelten Werten eine Bestimmung eines Maximum-Werts durchführt wird, wobei eine Zeitschätzung für einen Zeitversatz zwischen einem Referenz-Zeitpunkt einer Aussendung des Telegramm-Fragments und einem für die Auswertung des Telegramm-Fragments für den Referenz-Zeitpunkt angenommenen und/oder geschätzten Wert durchführt wird, indem die Signalauswertevorrichtung ausgehend von einem durch die Bestimmung des Maximum-Werts erhaltenen Maximalwert und mindestens einem hinsichtlich einer Zeitvariable zum Maximalwert benachbarten Wert einen Zeit-Schätzwert für einen Zeitversatz ermittelt.

Eine Ausgestaltung sieht vor, dass durch den Empfänger mehrere von dem Sender ausgesendete Telegramm-Fragmente empfangen werden, wobei die Telegramm-Fragmente jeweils eine Teil-Pilotsequenz aufweisen, wobei die Telegramm-Fragmente sich zu einem Telegramm ergänzen, das von dem Sender ausgesendete Daten beinhaltet, wobei die Telegramm-Fragmente kürzer als das Telegramm sind, wobei die Teil-Pilotsequenzen sich zu einer Pilotsequenz ergänzen, wobei ausgehend von den Teil-Pilotsequenzen der Empfänger mit dem Sender synchronisiert wird. Ausgehend von den Teil-Pilotsequenzen und unter Anwendung des DFT-Verfahrens wird ein Wert für eine Frequenzdifferenz zwischen einer Sendefrequenz des Senders und einer Empfangsfrequenz des Empfängers ermittelt, indem für jede Teil-Pilotsequenz Werte von Entscheidungsvariablen ermittelt werden, indem die ermittelten Werte der Entscheidungsvariablen über alle Teil-Pilotsequenzen miteinander kombiniert werden und indem mit den kombinierten Werten eine Bestimmung eines Maximum-Werts durchgeführt wird. Eine Frequenzschätzung für die Frequenzdifferenz wird durchgeführt, indem die Signalauswertevorrichtung ausgehend von einem durch die Bestimmung des Maximum-Werts erhaltenen Maximalwert und mindestens einem hinsichtlich einer Frequenzvariable zum Maximalwert benachbarten Wert einen Frequenz-Schätzwert ermittelt wird.

Eine Ausgestaltung besteht darin, dass durch den Empfänger mindestens ein von dem Sender ausgesendetes Telegramm empfangen wird, wobei das Telegramm eine Pilotsequenz aufweist. Ausgehend von der Pilotsequenz wird der Empfänger mit dem Sender synchronisiert. Ausgehend von der Pilotsequenz und unter Anwendung des DFT-Verfahrens wird ein Wert für eine Frequenzdifferenz zwischen einer Sendefrequenz des Senders und einer Empfangsfrequenz des Empfängers ermittelt, indem für die Pilotsequenz Werte von Entscheidungsvariablen ermittelt werden, indem mit den ermittelten Werten eine Bestimmung eines Maximum-Werts durchgeführt wird. Eine Frequenzschätzung wird für die Frequenzdifferenz durchgeführt, indem die Signalauswertevorrichtung ausgehend von einem durch die Bestimmung des Maximum-Werts erhaltenen Maximalwert und mindestens einem hinsichtlich einer Frequenzvariable zum Maximalwert benachbarten Wert einen Frequenz-Schätzwert ermittelt wird.

Die obigen Ausgestaltungen des Empfängers lassen sich durch Schritte von entsprechenden Ausgestaltungen des Verfahrens realisieren, sodass hier auf eine Wiederholung der Ausführungen verzichtet sei.

Der Empfänger wendet je nach Ausgestaltung eine Methode zur Frequenzschätzung bei fragmentierter Übertragung, also bei einer Fragmentierung der Telegramme beim "Telegram Splitting" an.

Bei einer Ausgestaltung wird somit das DFT-Verfahren zur Frequenzschätzung auf Telegramm-Splitting erweitert.

In einer Ausgestaltung wird eine Kombination nach der DFT, die für die einzelnen Telegramm-Fragmente angewendet wird, und vor der Maximalwertsuche, die sich somit auf alle Telegramm-Fragmente bezieht, vorgenommen.

In einer Ausgestaltung wird die Signalverarbeitung des DFT-Verfahrens bis einschließlich der DFT auf jedes Telegramm-Fragment angewendet, um die Ergebnisse vor der Maximalwertsuche über die Frequenzhypothesen zu kombinieren. Dabei erfolgt die weitere Verarbeitung auf Basis der kombinierten Werte.

Als Vorteil ergibt sich durch die Zusammenführung eine signifikante Rauschunterdrückung, wodurch sich das Schätzergebnis für Frequenz und Zeit erheblich verbessern lässt.

In einer Ausgestaltung findet eine Kombination durch gewichtete Addition von Einzelergebnissen, z. B. der Beträge bzw. Betragsquadraten statt.

In unterschiedlichen Ausgestaltungen erfolgt eine gewichteten Addition der jeweils einzeln bestimmten Werte der Entscheidungsvariablen durch eine Addition

- der Beträge,
- der Summe der Beträge von Real- und Imaginärteil oder
- der Betragsquadrate.

Mathematisch lassen sich die Ausgestaltungen wie folgt formulieren:
Es seien $d_{i,n}[k]$ die Entscheidungsvariablen (für $i = 0, 1, ..., N_{DFT}-1$) des k-ten Abtastzeitpunkts nach der DFT des n-ten Fragments.

Dann gilt:

Addition der Beträge:

$$\left| d_i\left[ k \right] \right| = \sum_{n=0}^{N_{frag}-1} c_n \left| d_{i,n}\left[ k \right] \right| \qquad (5)$$

Addition der Beträge von Re und Im:

$$\left| d_i\left[ k \right] \right| = \sum_{n=0}^{N_{frag}-1} c_n \left( \left| \operatorname{Re}\left\{ d_{i,n}\left[ k \right] \right\} \right| + \left| \operatorname{Im}\left\{ d_{i,n}\left[ k \right] \right\} \right| \right) \qquad (6)$$

Addition der Betragsquadrate:

$$\left| d_i\left[k\right]\right|^2 = \sum_{n=0}^{N_{\text{frag}}-1} c_n^2 \left| d_{i,n}\left[k\right]\right|^2 \qquad (7)$$

In einer Ausgestaltung ist vorgesehen, dass das Symbolraster über die Dauer aller gesendeten Fragmente konstant bleibt und der Abstand zwischen den Fragmenten (z. B. in Anzahl von Symbolintervallen) dem Empfänger bekannt ist. In diesem Fall entsprechen die k-ten Abtastwerte aus jedem Telegramm-Fragment (vom Beginn des Fragments an gezählt) einander. Ferner ist in einer Ausgestaltung vorgesehen, dass sich die Frequenzablage über die Dauer aller Fragmente nicht wesentlich verändert.

In einer Ausgestaltung erfolgt eine kohärente Kombination, d. h. eine Kombination nach Betrag und Phase der jeweils ermittelten Wert der Entscheidungsvariablen. Dies insbesondere für den Fall, dass die Träger-Phase von Telegramm-Fragment zu Telegramm-Fragment gleich bleibt, d. h. die Kohärenz muss über die Telegramm-Fragmente gegeben sein.

Die Wahl der Gewichtsfaktoren für die Addition der Werte der Entscheidungsvariablen wird in einigen Ausgestaltungen näher spezifiziert.

In einer Ausgestaltung werden die vorgenannten Gewichtsfaktoren $c_n$ proportional zur Wurzel aus dem geschätzten Signal-zu-Rauschleistungsverhältnis $SNR_n$ des n-ten Telegramm-Fragments gewählt, wobei das geschätzte SNR in einer Ausgestaltung auch die Leistung von ggf. vorhandenen Interferenzsignalen beinhaltet. Das entspricht dem Maximal Ratio Combining (MRC) bei Antennendiversität.

Im Falle von Störleistungen, die für die einzelnen Fragmente unterschiedlich sein können, sieht es eine Ausgestaltung vor, die Gewichtsfaktoren proportional zur Wurzel aus dem Verhältnis $SNR_n/P_{Nn}$ des geschätzten SNR zur geschätzten Rauschleistung $P_N$ des n-ten Telegramm-Fragments zu setzen.

Durch die Wahl der Gewichtsfaktoren wird das SNR in der Entscheidungsvariablen nach der Kombination maximiert.

Alternativ werden die obigen Gewichtsfaktoren $c_n$ gleich 1 gesetzt werden. Das entspricht dem bekannten Equal Gain Combining (EGC) bei Antennendiversität.

Eine Ausgestaltung stellt eine Verbesserung der Parameterschätzwerte dar.

Dabei findet in einer Ausgestaltung eine Verbesserung der Zeitschätzung mittels Interpolation statt.

Zur Erhöhung der Genauigkeit der Zeitschätzung sieht es eine Ausgestaltung vor, nach Ermittlung des Zeitindexes $k_0$ beim DFT-Verfahren die Zeitschätzung durch eine Interpolation zwischen dem Maximalwert (also $|d_i[k_0]|$), dem Wert davor (also $|d_i[k_0-1]|$) und dem Wert danach (also $|d_i[k_0+1]|$) zu verbessern.

Die beiden Nachbarwerte müssen denselben Frequenzindex haben wie der Maximalwert, d. h. $i = i_0[k_0]$.

Als Interpolationsfunktion wird in einer Ausgestaltung ein Polynom zweiten Grades der Form $y(x) = y_0 - c(x-x_0)^2$ verwendet.

Die freien Parameter $y_0$, c und $x_0$ werden in einer Ausgestaltung so bestimmt, dass das Polynom durch die drei Werte $y(-1) = |d_i[k_0-1]|$, $y(0) = |d_i[k_0]|$ und $y(1) = |d_i[k_0+1]|$ verläuft.

Der Abszissenwert $x_0$ des Polynommaximums stellt den verbesserten Zeitschätzwert dar (normiert auf das Abtastintervall T/N). Er lässt sich geschlossen aus den drei gegebenen y-Werten wie folgt berechnen:

$$x_0 = \frac{1}{2} \frac{y(1) - y(-1)}{2y(0) - y(1) - y(-1)}.$$

In einer alternativen oder ergänzenden Ausgestaltung wird eine Verbesserung der Frequenzschätzung mittels Interpolation vorgenommen.

Zur Erhöhung der Genauigkeit der Frequenzschätzung sieht es eine Ausgestaltung vor, nach Ermittlung des Zeitindexes $k_0$ die Frequenzschätzung durch eine Interpolation zwischen dem Maximalwert an der Stelle $i_0$ (also $d_{i_0}[k_0]$), dem Wert für $i_0-1$ (also $d_{i_0-1}[k_0]$) und dem Wert für $i_0+1$ (also $d_{i_0+1}[k_0]$) zu verbessern.

Die beiden Nachbarwerte müssen von derselben DFT stammen, aus der der Maximalwert ermittelt wurde. Dies ist die DFT zum Zeitpunkt $k_0$.

Als Interpolationsfunktion wird in einer Ausgestaltung ein Polynom zweiten Grades der Form $y(x) = y_0 - c(x-x_0)^2$ verwendet. Dies entspricht dem zuvor genannten Polynom, wie es zur Verbesserung der Zeitschätzung beschrieben wurde.

Die freien Parameter $y_0$, c und $x_0$ werden so bestimmt, dass das Polynom exakt durch die drei Werte $y(-1) = |d_{i_0-1}[k_0]|$, $y(0) = |d_{i_0}[k_0]|$ und $y(1) = |d_{i_0+1}[k_0]|$ verläuft.

Aus dem Abszissenwert $x_0$ des Polynommaximums lässt sich der verbesserte Frequenz-schätzwert über

$$\hat{v}T = \frac{i_0 + x_0}{N_{FFT}} - \begin{cases} 0 & \text{für } i_0 < N_{FFT}/2 \\ 1 & \text{für } i_0 \geq N_{FFT}/2 \end{cases} \qquad (8)$$

berechnen.

Der Wert $x_0$ lässt sich geschlossen aus den drei gegebenen y-Werten gemäß Formel (8) berechnen.

In einer Ausgestaltung ist folgende Abfolge der Maßnahmen zur Schätzwertverbesserung vorgesehen.

Zur Optimierung von Zeit- und Frequenzschätzung ist vorgesehen, mit einem Überabtastfaktor von N = 2 in einer Ausgestaltung zu arbeiten und folgende Operationen in der angegebenen Reihenfolge durchzuführen:

1. Interpolation im Zeitbereich wie zuvor beschrieben. Ein Ergebnis ist der Zeitschätzwert $\hat{\tau}$.

2. Näherungsweise Berechnung von L neuen Abtastwerten des Signals x(t) im Symboltakt, wobei die Abtastzeitpunkte gegenüber den ursprünglichen um $\hat{\tau}$ verschoben sind. Dies geschieht zweckmäßigerweise mittels einer Interpolationsfilterung der vorhandenen Abtastwerte x[k-LN-1], x[k-LN], ..., x[k+2].

- Als Interpolationsfilter wird in einer Ausgestaltung ein FIR-Filter mit vier Koeffizienten verwendet. Dies liefert erfahrungsgemäß eine ausreichende Genauigkeit bei 2-facher Überabtastung.
- Zur Berechnung der Filterkoeffizienten sieht es eine Ausgestaltung vor, die Methode der Minimierung des mittleren quadratischen Fehlers (Minimum Mean Square Error = MMSE) zu verwenden, wobei als Berechnungsgrundlage die Faltung des Modulationsimpulses mit der Impulsantwort des Empfangsfilters dient. Bei einem matched Filter als Empfangsfilter ist dies die AKF des Modulationsimpulses.
- Die Filterkoeffizienten lassen sich a priori für ein hinreichend feines Raster von Zeitschätzhypothesen (z. B. im Raster 0.01T) berechnen und abspeichern. Zur Anwendung kommt jeweils das Filter, dessen Zeithypothese dem aktuellen Zeit-schätzwert $\hat{\tau}$ am nächsten liegt.

3. Erneute Berechnung der Entscheidungsvariablen $d_i[k_0]$ auf Basis der im vorherigen Schritt interpolierten Abtastwerte. Dabei kann eine andere DFT-Länge gewählt werden.

- Da nur drei Ausgangswerte der DFT interessieren, kann diese ersetzt werden durch die dreimalige Multiplikation mit Abtastwerten dreier komplexer Exponentialschwingungen mit den Frequenzen $v_0T - \dfrac{1}{N_{DFT}}$, $v_0T$ und $v_0T + \dfrac{1}{N_{DFT}}$, wobei die DFT-Länge beibehalten wird.

4. Polynominterpolation im Frequenzbereich wie zuvor beschrieben. Ein Ergebnis ist der Frequenzschätzwert $\hat{v}$.

5. Zur weiteren Verbesserung der Schätzwerte wird in einer weiteren Ausgestaltung anschließend eine zweite Polynominterpolation durchgeführt, die Werte verwendet, die in einem dichteren Frequenzraster liegen. Dazu müssen die DFT-Eingangswerte dreimal mit Abtastwerten dreier komplexer Exponentialschwingungen mit den Frequenzen $\hat{v}T - \Delta vT$, $\hat{v}T$ und $\hat{v}T + \Delta vT$ multipliziert werden, wobei $\Delta\gamma T << 1/N_{DFT}$ zu wählen ist.

$$\Delta vT = \frac{1}{8 N_{DFT}}.$$

In einer Ausgestaltung gilt:

Alternativ zu den Schritten 3 bis 5 wird in einer Ausgestaltung ein Verfahren zur direkten Schätzung der noch verbleibenden Frequenzablage eingesetzt. Dies ist z. B. das Verfahren nach Louise und Reggiannini.

Dazu sind nur folgende Schritte erforderlich:

3. Berechnung von L Werten gemäß

$$z[l] = x\left[k - (L - 1 - l)N\right]a^*[l]e^{j2\pi l v_0 T} \qquad \text{für } l = 0, 1, 2, ..., L-1, \qquad (9)$$

wobei die Abtastwerte x[.] die interpolierten Werte aus dem 2. Schritt sind. Die Multiplikation mit einer komplexen Exponentialschwingung mit der Frequenz $v_0T$ entspricht einer Frequenzkorrektur um die Frequenz $v_0T$.

4. Durchführung der Berechnungen gemäß den Formeln (2) und (4) mit den Werten aus Formel (9). Der Schätzwert für die gesamte Frequenzablage ergibt sich dann aus der Summe von $v_0T$ und dem Schätzwert aus Formel (4).

Schließlich bezieht sich die Erfindung auf ein Computerprogramm mit einem Programmcode zur Durchführung des vorgenannten Verfahrens nach Anspruch 7 oder 9.

Im Einzelnen gibt es eine Vielzahl von Möglichkeiten, den Sender den Empfänger, das System sowie die entsprechenden Verfahren auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:

Fig. 1    eine schematische Darstellung einer Signalverarbeitung zur Zeit- und Frequenzschätzung,
Fig. 2    eine Darstellung eines MSK-Basisband-Signals für drei positiv gemappte Symbole,
Fig. 3    eine Darstellung eines MSK-Basisband-Signals bei idealem Zeitversatz,
Fig. 4    eine Darstellung eines MSK-Basisband-Signals bei negativem Zeitversatz,
Fig. 5    einen Verlauf der Symbolamplitude nach der Matched Filterung über dem Zeitversatz,
Fig. 6    einen Verlauf des Phasenoffsets des in der Fig. 5 betrachteten Symbols über dem Zeitversatz nach der Matched Filterung und der Multiplikation mit dem konjugiert komplexen des Referenzsymbols,
Fig. 7    eine Darstellung eines MSK-Basisband-Signal für drei Symbole, wobei das letzte Symbol negativ gemappt ist,
Fig. 8    einen Verlauf der Symbolamplitude aus Fig. 7 nach der Matched Filterung über dem Zeitversatz,
Fig. 9    einen Verlauf des Phasenoffsets des in der Fig. 8 betrachteten Symbols über dem Zeitversatz nach der Matched Filterung und der Multiplikation mit dem konjugiert komplexen des Referenzsymbols,
Fig. 10   eine schematische Darstellung eines Kommunikationssystem mit einem Sender und einem Empfänger,
Fig. 11   eine schematische Darstellung eines Beispiels einer verwendeten Modulation und
Fig. 12   eine Verdeutlichung einer Interpolation durch ein Polynom zweiten Grades.

Beim Telegrammsplitting (siehe z. B. DE 10 2011 082 098 A1) werden zu übertragende Daten nicht in einem Datenpaket versendet, sondern es werden mehrere Datenpakete erzeugt, die ggf. mit unterschiedlichen Frequenzen und zu unterschiedlichen Zeiten ausgesendet werden. Aus einem Telegramm werden somit mehrere Telegramm-Fragmente erzeugt. Dabei verfügt jedes Telegramm-Fragment über eine Pilotsequenz, die der Synchronisierung zwischen Sender und Empfänger dient. Die Pilotsequenzen sind dabei in einer Ausgestaltung identisch und in einer anderen Ausgestaltung unterschiedlich zueinander.

Eine Pilotsequenz besteht im Allgemeinen aus einer Anzahl L Modulationssymbolen (im Folgenden auch Pilotsymbole genannt). Sie wird üblicherweise kompakt entweder am Anfang (Präambel) oder in der Mitte (Midambel) des Telegramms bzw. des Telegramm-Fragments übertragen. Sie kann aber auch in zwei oder mehrere Segmente zerlegt werden, zwischen denen Datensymbole übertragen werden. Es ist gängige Praxis, die Pilotsymbole demselben Modulationsalphabet wie die Datensymbole zu entnehmen (z. B. multiple phase-shift keying, M-PSK, oder M-ary Quadrature Amplitude Modulation, M-QAM). Die Pilotsymbole sind dem Empfänger vorab bekannt bzw. sind beispielsweise passend hinterlegt.

In Empfängern ist es üblich, das Empfangssignal nach einer Bandpassfilterung ins Basisband herunterzumischen und mittels eines Analog-Digital-Konverters (ADC) zeitlich äquidistant abzutasten und zu quantisieren. Jeder Abtastwert ist komplex-wertig und besteht aus einem Real- und einem Imaginärteil. Die Abtastung erfolgt dabei mindestens im Symboltakt oder einem Vielfachen davon (sog. Überabtastung).

Für die für die Synchronisation erforderliche Zeitschätzung und Frequenzschätzung sind mehrere Verfahren bekannt, die im Folgenden beschrieben werden.

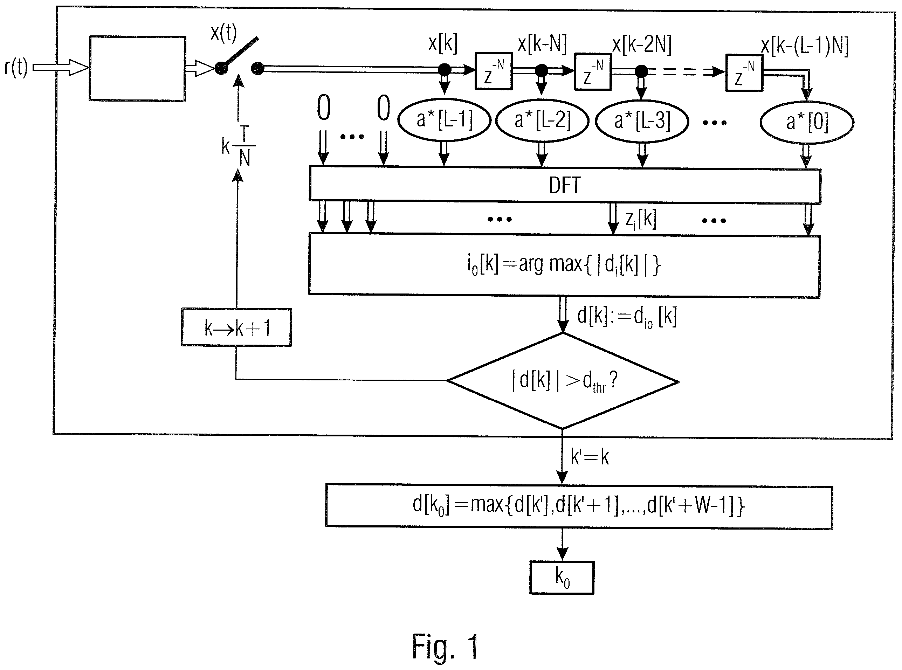

DFT-Verfahren:
In [9] wird ein Verfahren beschrieben, das auch für große Frequenzablagen geeignet ist. Die Frequenzablage ist dabei die Frequenzdifferenz zwischen der Trägerfrequenz des Sendesignals und der Mittenfrequenz des Empfangsfilters. Die wesentlichen Signalverarbeitungsschritte werden in Fig. 1 veranschaulicht.

Dabei ist T der Symbolabstand bzw. ist 1/T die Symbolrate. N ist der Überabtastfaktor und k*T/N bezeichnet den Zeitpunkt des k-ten Abtastwertes. Die Pilotsymbole werden mit a[0], a[1], ..., a[L-1] bezeichnet, wobei a[0] zuerst und a[L-1] zuletzt gesendet wird. Das hochgestellte Zeichen * zeigt an, dass der konjugiert komplexe Wert zu verwenden ist. Das Verzögerungselement wird mit $z^{-N}$ bezeichnet, wobei es sich um die Verzögerung um N Abtastwerte handelt. Weiterhin ist W die Fensterlänge zur Maximalwertsuche in Anzahl der Abtastwerte.

Zeitvariable in runden Klammern sind stets zeitkontinuierlich, z. B. bezeichnet r(t) das zeitkontinuierliche Empfangssignal. Demgegenüber sind Zeitvariable in eckigen Klammern zeitdiskret und stellen üblicherweise eine fortlaufende Nummerierung von Abtastwerten dar. So bezeichnet z. B. x[k] den k-ten Wert des (zeit-kontinuierlichen) Signals x(t) nach dem Empfangsfilter.

Das Signal wird nach dem Empfangsfilter, der aus dem Signal r(t) das Signal x(t) erzeugt, mit N Werten pro Symbol zeitlich äquidistant abgetastet und quantisiert. Zu jedem Zeitpunkt k werden L Abtastwerte im Symbolabstand (d. h. jeder N-te Abtastwert) entnommen und zunächst mit den L konjugiert komplexen Pilotsymbolen multipliziert. Diese werden mit den Abtastwerten einer komplexen Exponentialschwingung multipliziert und anschließend aufsummiert. Der letzte Vorgang wird mehrfach für verschiedene Frequenzen dieser Schwingung, die als Frequenzhypothesen bezeichnet werden, durchgeführt. Für äquidistante Frequenzhypothesen entspricht dies der diskreten Fourier-Transformation (DFT) der L Produkte x[k]a*[L-1], x[k-N]a*[L-2] bis x[k-(L-1)N]a*[0].

Die DFT lässt sich besonders effizient mit dem bekannten Algorithmus der schnellen Fourier-Transformation (FFT) durchführen, sofern L eine Zweierpotenz ist. Falls L keine Zweierpotenz ist, rundet man die DFT-Länge auf die nächst höhere Zweierpotenz auf und ergänzt die L Werte um entsprechend viele Nullen, sodass eine FFT angewendet werden kann. Zur Erhöhung der Genauigkeit der Frequenzschätzung können die L FFT-Eingangswerte noch durch eine beliebige Anzahl weiterer Nullen ergänzt werden.

Jede Frequenzhypothese liefert einen komplexen Wert, der mit $d_i[k]$ bezeichnet und als Entscheidungsvariable bezeichnet sei. Dabei verweist der Index i auf die i-te Frequenz. Für jeden Zeitschritt k wird das Maximum des Betrages $|d_i[k]|$ über alle Frequenzindices i bestimmt Der zum Maximum gehörende Frequenzindex wird mit $i_0$ bezeichnet. Liegt dieses Maximum über einer Entscheidungsschwelle $d_{thr}$, so gilt eine Pilotsequenz (alternativ auch als Trainingssequenz bezeichnet) als erkannt. Der zugehörige Zeitindex sei mit k' bezeichnet. Im positiven Fall, dass das Maximum über der Entscheidungsschwelle liegt, wird somit k' gleich k gesetzt. Im negativen Fall wird k erhöht (aus k wird k + 1, Fig. 1). Der Vergleich mit der Entscheidungsschwelle ist dabei jeweils optional.

Es ist bekannt, dass zur genaueren Zeitlageschätzung eine weitere Analyse des Empfangssignals notwendig ist.

Eine Weiterverarbeitung ist folgende:

Es werden die Entscheidungsvariablen zum Zeitpunkt k' und für jeden auf k' folgenden Zeitpunkt analysiert und das Betragsmaximum innerhalb eines Zeitfenster gegebener Dauer bestimmt. Der zu diesem Maximum gehörende Zeitindex sei mit $k_0$ bezeichnet.

Die zum Index $i_0[k_0]$ gehörende Frequenz stellt bereits eine grobe Schätzung der Frequenzablage dar. Sie sei mit $\nu_0$ bezeichnet und ist gegeben durch

$$\nu_0 T = \frac{i_0}{N_{DFT}} - \begin{cases} 0 & \text{für } i_0 < N_{DFT}/2 \\ 1 & \text{für } i_0 \geq N_{DFT}/2 \end{cases} \tag{1}$$

Bei additiven Gauß'schen Störungen ist das DFT-Verfahren im Sinne der Maximum Likelihood-Schätzung optimal. Es ist anwendbar für Frequenzablagen bis nahezu der halben Symbolrate. Die Schätzgenauigkeit ist im Wesentlichen durch den Überabtastfaktor N und die DFT-Länge NDFT begrenzt. Für großes N und großes NDFT kommt der mittlere quadratische Schätzfehler sowohl für Zeit als auch für Frequenz nahe an die theoretisch erreichbar Grenze heran (Cramer-Rao-Schranke). Das Verfahren ist für beliebige Pilotsequenzen anwendbar.

Frequenzschätzung nach Luise und Reggiannini:

Der Schätzer nach Luise und Reggiannini basiert auf folgenden Werten:

$$R[\lambda] = \frac{1}{L-\lambda} \sum_{l=0}^{L-\lambda-1} z[l+\lambda] z^*[l] \text{ für } \lambda = 0, 1, ..., \Lambda \tag{2}$$

mit

$$z[l] = x[k-(L-1-l)N]a^*[l] \tag{3}$$

Der Frequenzschätzwert ergibt sich aus:

$$\hat{\nu}T = \frac{1}{\pi(\Lambda+1)} \arg\left\{ \sum_{\lambda=1}^{\Lambda} R[\lambda] \right\} \tag{4}$$

Der Schätzer hat folgende Eigenschaften:

- Er ist innerhalb des nutzbaren Schätzbereichs auch für niedriges $E_S/N_0$ - also Energie pro Symbol als Maß für die Signal-zu-Rauschen-Verhältnis - als spektrale Rauschleistungsdichte erwartungstreu.
- Für $\Lambda = L/2$ und $E_S/N_0 > 0$ dB liegt der Schätzer dicht an der der Cramer-Rao-Schranke und für die Frequenzablage Null genau auf der Cramer-Rao-Schranke. Man kann ihn als optimal bezeichnen.

- Der Schätzbereich ist beschränkt auf: $|vT| \leq \dfrac{0,85}{\Lambda + 1}$ .

Eine Nachteil ist, dass vor der Anwendung eine hinreichend genaue Zeitsynchronisation erforderlich ist. Ein weiterer Nachteil ist, dass das Verfahren wegen des eingeschränkten Schätzbereichs nicht geeignet für große Frequenzablagen ist.

Die Phasenschätzung lässt sich, wie im Folgenden beschrieben wird, verbessern.

Für die datengestützte Phasenversatzschätzung in kohärenten Empfängern werden in der Regel die Synchronisationssymbole, welche in einem übertragenen Paket vorhanden sind, eingesetzt. Es werden also die Pilotsymbole der Pilotsequenzen verwendet. Dabei werden die Phasen der empfangenen Symbole mit den erwarteten Phasen (Referenzsymbole) verglichen. Die Differenz aus beiden ergibt den Phasenversatz. Zur Rauschunterdrückung wird beispielsweise eine Mittelung über mehrere Symbole durchgeführt.

Ein Beispiel für eine solche Phasenschätzung gibt der Maximum Likelihood Schätzer (siehe [6]).

Dieser Schätzer erzielt brauchbare Ergebnisse, falls der exakte Zeitpunkt der Übertragung bekannt ist. Dieser wird in der Regel jedoch in einer vorherigen Schätzung ermittelt, wobei durch Rauschen und andere Effekte Abweichungen auftreten können. Außerdem ist es aufgrund von Beschränkungen der Rechenleistung nicht immer möglich, eine hinreichend genaue Zeit-Schätzung durchzuführen.

Somit enthalten die Empfangssymbole einen Rest-Zeitversatz, der in die Phasenschätzung eingeht und diese verschlechtert. Es ergibt sich durch den Rest-Zeitversatz oder allgemein Zeitversatz ein Phasenfehler, der zu der eigentlich interessierenden Phase zwischen der Sendefrequenz des Senders und der Empfangsfrequenz des Empfängers hinzukommt und daher die Auswertung beeinträchtigt.

Im Folgenden werden Ausgestaltungen beschrieben, die eine Verbesserung der Phasenschätzung ergeben. Die Ausgestaltungen gelten auch für eine verbesserte Frequenzschätzung, für den Fall, dass die Frequenzschätzung auf Phasendifferenzen benachbarter Symbole basiert.

Bei der Symbolrückgewinnung (z. B. durch Matched Filterung und folgender Unterabtastung) wird durch einen Zeitversatz auch ein Teil zumindest eines benachbarten Symbols in das Ergebnis eingebracht. Dieses Phänomen wird im Folgenden anhand einer MSK-Modulation beschrieben. Das Mapping dient dabei beispielsweise der Pilotsequenz-Bits auf die eigentlichen Symbole der Pilotsequenzen.

Zur Vereinfachung der Darstellung enthalten die folgenden Grafiken jeweils nur drei Symbole. Hierbei stellt das mittlere Symbol das zu untersuchende Symbol dar und die beiden anderen das zeitlich vorherige bzw. nachfolgende Symbol.

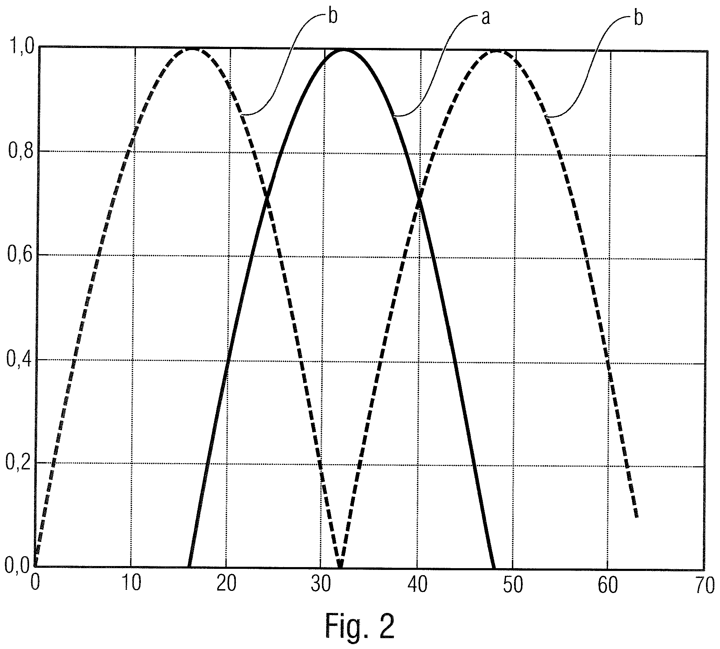

Fig. 2 zeigt ein MSK-Basisbandsignal mit drei Symbolen. Hierbei sind sowohl das zu untersuchende Symbol, als auch das vorherige und folgende Symbol mit positiver Amplitude gemappt worden. Es handelt sich somit um ein mittleres Symbol und zwei flankierende Symbole. Die Kurve a zeigt dabei den Realteil und die Kurven b zeigen den Imaginärteil des Signals. Aufgetragen ist dabei auf der y-Achse die Amplitude gegenüber der Zeit in Abtastzeitpunkten auf der x-Achse.

Im Folgenden wird der Einfluss der Phase für das mittlere Symbol untersucht, welches auf dem Realteil übertragen wird. Die beiden anderen flankierenden Symbole (das vorherige und das folgende Symbol) werden laut MSK-Vorschrift als einem Beispiel für das Mapping bei der Erzeugung der auszusendenden Symbole auf dem Imaginärteil übertragen.

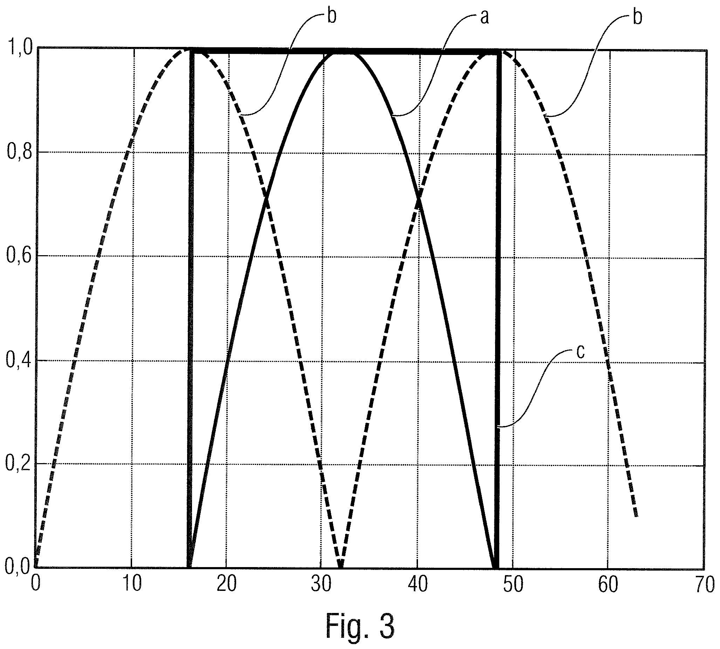

Die Symbolrückgewinnung erfolgt im Empfänger mit Hilfe eines Matched Filters, welcher mit dem Signal multipliziert und anschließend über das gesamte Symbol summiert wird. Die Fig. 3 zeigt die Länge des Matched Filters (stärkere Kurve c). Der Filter erstreckt sich über das gesamte mittlere Symbol. In Fig. 3 wird somit der Idealfall dargestellt, bei dem kein Zeitversatz auftritt.

Durch die spezielle MSK-Modulation wird bei der Matched Filterung zur Rekonstruktion der Symbole ein sog. ISI (Intersymbol Interference, sog. Symbolübersprechen, siehe [7]) eingefügt. Das Symbolübersprechen ist bekannt und kann bei der Berechnung der Phasendifferenzen berücksichtigt werden.

Für die Symbolrückgewinnung werden entsprechend die Daten innerhalb des gezeigten Bereichs ausgeschnitten und mit dem Matched Filter (Optimal-Filter) oder einer Näherung multipliziert. Das Symbol ergibt sich durch Integration (im zeitkontinuierlichen Fall) oder Summation (im zeitdiskreten Fall).

Wird das rekonstruierte Symbol aus Fig. 3 mit dem Sendesymbol (bzw. einem dem Empfänger vorliegenden Referenzsymbol) verglichen, so zeigt sich, dass kein Phasenversatz zwischen den beiden Symbolen vorhanden ist.

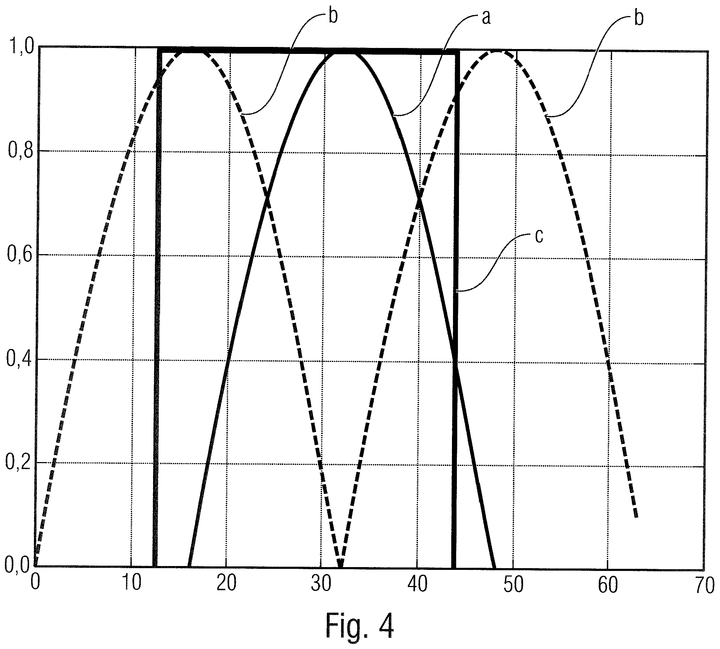

Tritt jedoch ein Zeitversatz auf, so wird das Fenster für den Matched Filter verschoben. Die Fig. 4 zeigt dies für einen negativen Zeitversatz, bei dem der korrekte Zeitpunkt nach dem angenommen Zeitpunkt liegt. Der Start des Symbols wird somit zu früh angenommen Für die Phasenbestimmung ergibt sich somit aus dem Zeitversatz ein Phasenfehler als zusätzlicher Fehler bei der eigentlichen Bestimmung der Phase.

Durch den Zeitversatz fließt mehr Energie des vorangehenden flankierenden Symbols und weniger des eigentlich interessierenden mittleren Symbols in die Rekonstruktion des mittleren Symbols ein. Der Wert weicht somit vom erwarteten Sollwert ab. Weicht der Empfangswert jedoch vom erwarteten ab, so entsteht durch diese Abweichung ein Fehler in der Phasenschätzung.

Ähnlich gilt dies für einen positiven Zeitversatz, bei dem das eigentliche Symbol vor der angenommen Zeit beginnt. Damit erhöht sich der Einfluss allerdings des auf das mittlere Symbol folgenden flankierenden Symbols.

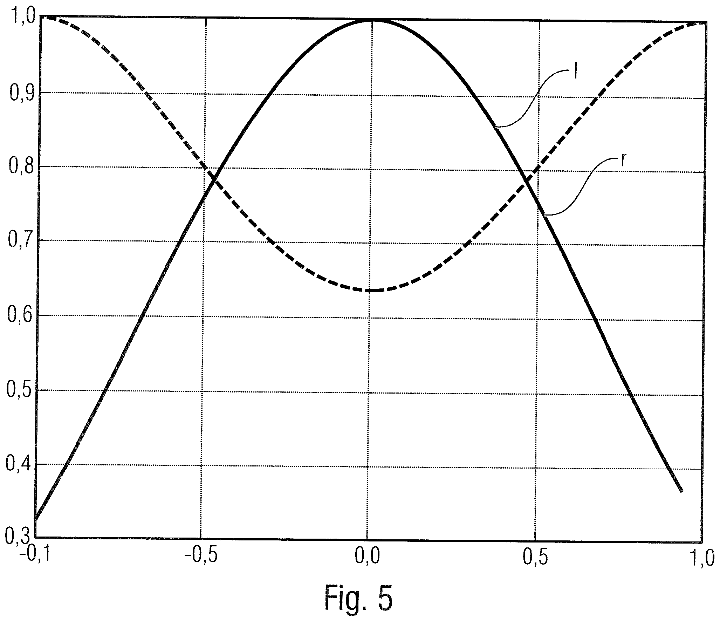

Einen Verlauf der Ergebnisse der Symbolrekonstruktion bei verschiedenen Zeitversätzen zeigt Fig. 5. Die Mitte stellt dabei den idealen Zeitpunkt dar. Aufgetragen ist die Amplitude auf der y-Achse gegenüber dem Zeitversatz (oder alternativ bezeichnet: dem Timing Fehler) in Symbollängen. Aufgetragen sind der Realteil R und der Imaginärteil I.

Fig. 5 zeigt, dass zum idealen Zeitpunkt der Einfluss der Nachbarsymbole (also der flankierenden Symbole im Beispiel der Fig. 2) am geringsten ist. Mit zunehmendem Zeitversatz nimmt der Einfluss der Nachbarsymbole zu, d. h. in diesem Beispiel mit MSK-Modulation steigt die Amplitude des Imaginärteils.

Wird das Empfangssymbol (also hier das mittlere Symbol) nach der Matched Filterung mit dem konjugiert komplexen des Sendesymbols (also des Referenzsymbols bzw. des zugehörigen Symbols der Referenzsequenz) multipliziert, so erhält man den Phasenoffset zwischen Referenzsymbol und dem betrachteten mittleren Symbol der Kombination aus drei Symbolen der Pilotsequenz des empfangenen Signals.

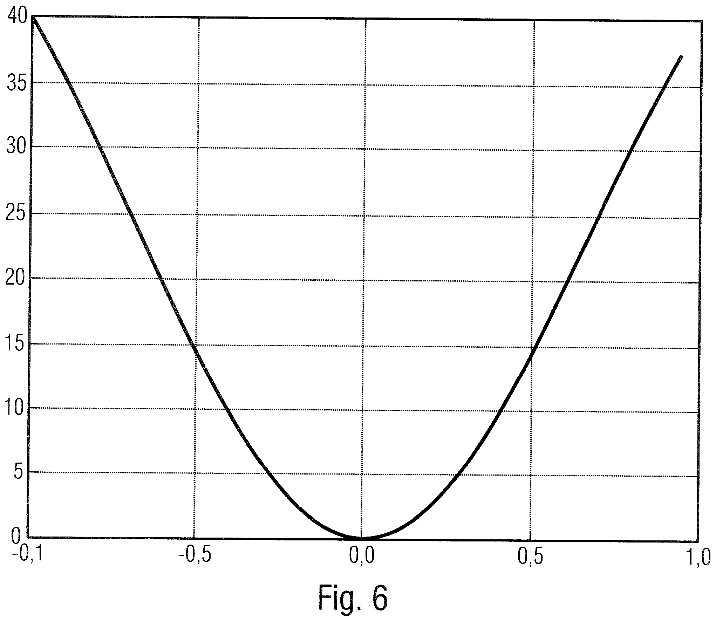

Den Phasenoffset zeigt Fig. 6 für das zur Fig. 5 zugehörige Symbol über dem Zeitversatz. In dieser Symbolkonstellation ist der Phasenoffset - also der sich ergebenden Phasenfehler durch den Zeitversatz - immer positiv. Die Höhe ist jedoch abhängig von der Höhe des Zeitversatzes.

Die vorherigen Ausführungen zeigen, dass das Ergebnis der Matched Filterung und somit auch der Phasenfehler bei Zeitversätzen von den vorherigen und folgenden - also den im Beispiel das jeweils betrachtete mittlere Symbole flankierenden - Symbolen abhängig ist.

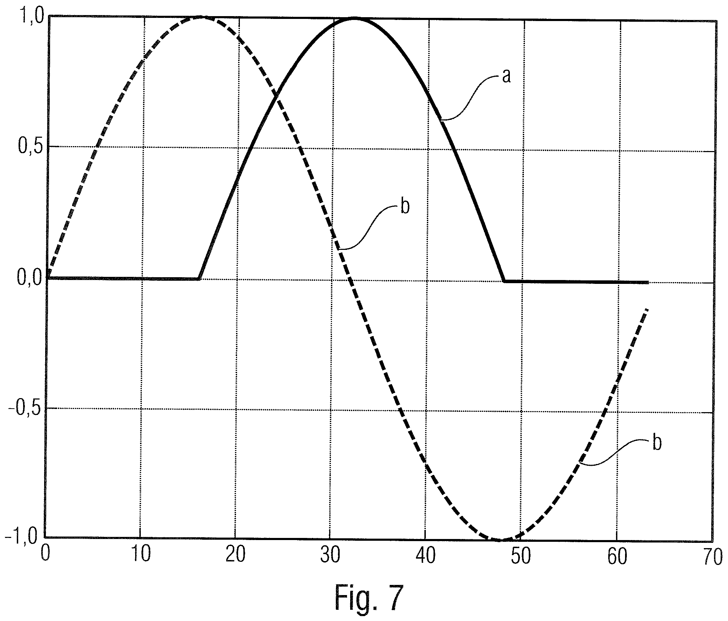

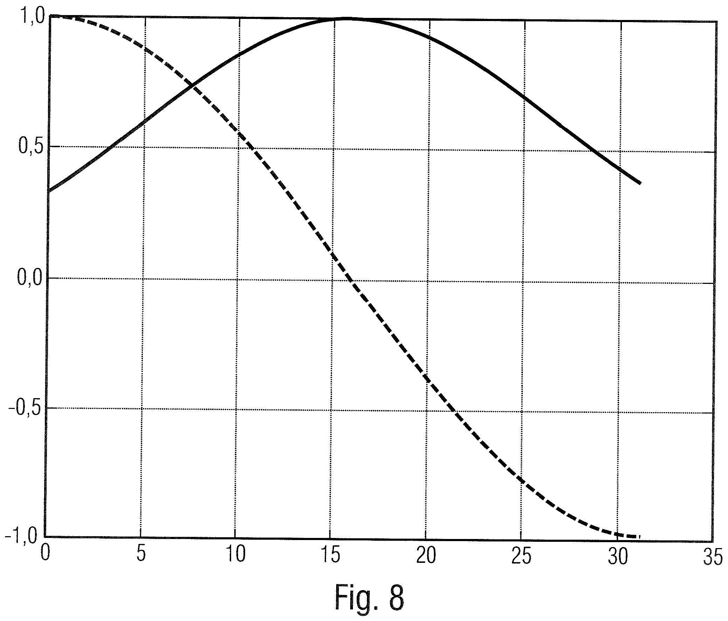

Um dies vollständig zu eruieren, wurde das Ergebnis der Matched Filterung unter Zeitversatz für eine andere Symbolkonstellation erneut berechnet. Das zu betrachtende Symbol ist ebenfalls wieder mit positiver Amplitude gemappt worden, allerdings besitzen die zwei flankierenden Symbole eine unterschiedliche Amplitude. Das komplexe Basisbandsignal und das Ergebnis der Matched Filterung mit verschiedenen Zeitversätzen sind in der Fig. 7 und der Fig. 8 gezeigt.

Die Fig. 7 zeigt die Amplitude der drei Symbole b, a, b gegenüber der Zeit in Abtastraten. Die beiden flankierenden Symbole b umfassen das mittlere Symbol a. Bei diesem MSKsignal in der gewählten Konstellation tritt am idealen Abtastzeitpunkt kein Symbolübersprechen (ISI) durch die flankierenden Symbole mit dem mittleren Symbol auf.

Die Fig. 8 zeigt die Amplitude des mittleren Symbole nach der Matched Filterung in Abhängigkeit vom Zeitversatz.

Wird das Empfangssymbol nach der Matched Filterung in gleicher Weise wie für die Fig. 6 mit dem konjugiert komplexen Wert des Sendesymbols multipliziert, so erhält man den Phasenoffset zwischen dem Referenzsymbol und dem betrachteten Empfangssymbol.

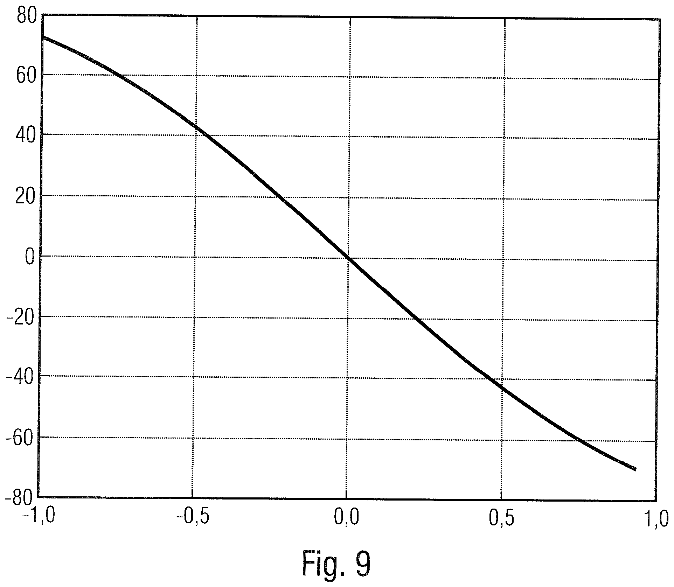

Den Phasenoffset zeigt Fig. 9 für das in Fig. 8 betrachtete mittlere Symbol über dem Zeitversatz. Im Vergleich zu Fig. 6 ist der Verlauf des Phasenoffsets nicht mehr nur positiv zu allen möglichen Zeitversätzen. Für negative Zeitoffsets ist der Phasenoffset positiv und für positive Zeitversätze ändert er sein Vorzeichen und wird negativ.

Insgesamt ist der Phasenoffset abhängig von den Symbolen, die das jeweils ausgewertete Symbol flankieren.

Daher sind die Symbole so gewählt, dass die sich jeweils infolge eines Zeitversatzes ergebenden Phasenfehler bei der Auswertung der einzelnen Symbole sich insgesamt bei der Mittelung über die betroffenen Symbole - sei dies aus einem Signal oder über mehrere Signale - gegenseitig kompensieren.

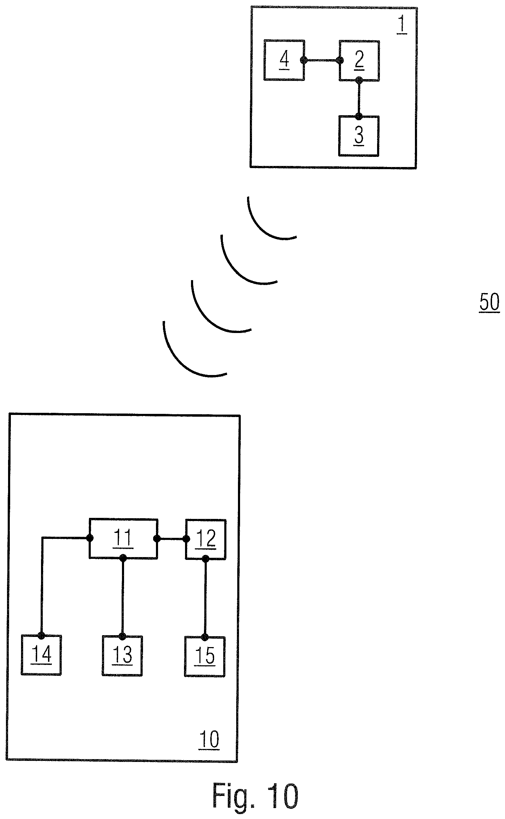

Die Fig. 10 zeigt ein System 50 mit einem Sender 1 und einem Empfänger 10.

Der Sender 1 verfügt über einen Signalgenerator 2 und eine Signalausgabevorrichtung 3. Der Signalgenerator 2 erzeugt ausgehend von Daten, die der Sender 1 zu übertragen hat, die auszusenden Signale. Die Daten sind beispielsweise Sensordaten oder Zustandsdaten des Senders 1 selbst.

Im gezeigten Ausführungsbeispiel wird das Telegramm-Splitting angewendet, sodass die auszugebenden Daten auf mindestens zwei Signale verteilt werden, die sich auch als Telegramm-Fragmente bezeichnen lassen. Die einzelnen Telegramm-Fragmente verfügen jeweils über eine Pilotsequenz, die von dem Signalgenerator 2 bereitgestellt wird. Die Bereitstellung für die einzelnen auszusenden Signale besteht dabei in einer Ausgestaltung darin, dass der Signalgenerator 2 auf einen Datenspeicher 4 zugreift, in welchem die Daten für die passende Pilotsequenz hinterlegt sind. Die Signalausgabevorrichtung 3 sendet die einzelnen Telegramm-Fragmente aus.

Die einzelnen Telegramm-Fragmente werden von dem Empfänger 10 empfangen und verarbeitet. Für die Verarbeitung ist eine Synchronisation zwischen Sender 1 und Empfänger 10 erforderlich, wofür die Synchronisationsvorrichtung 11 vorhanden ist. Der Synchronisation dienen dabei jeweils die Pilotsequenzen mit ihren Pilotsymbolen.

Eine Synchronisation ist bezüglich der Zeit erforderlich. Dies bezieht sich auf die Schätzung der zeitlichen Lage des empfangenen Signals und auf den damit verbundenen optimalen Zeitpunkt für die Abtastung des Signals. Für diese Synchronisation ist die Synchronisationsvorrichtung 11 mit einer Abtastvorrichtung 13 verbunden. Die Zeitpunkte der Abtastung können in der Regel nicht beeinflusst werden. Vielmehr ist der Zeitpunkt notwendig, um aus dem in der Regel überabgetasteten Signal die Symbole rekonstruieren oder andernfalls eine Interpolation durchführen zu können.

Eine weitere Synchronisation bezieht sich im gezeigten Beispiel auf die Frequenz. Relevant sind dabei die Trägerfrequenz, mit der die Signale von dem Sender 1 ausgesendet werden, und die Mittenfrequenz der Filtervorrichtung 14, mit der die empfangenen Signale gefiltert werden. Alternativ werden die Signale nach dem Empfang vor dem Filter frequenzmäßig verschoben. Die Differenz zwischen den beiden Frequenzen wird dabei als Frequenzablage bezeichnet. Für die Frequenzsynchronisation ist hier die Filtervorrichtung 14 mit der Synchronisationsvorrichtung 11 verbunden.

An die Frequenzsynchronisation schließt sich - in dem Fall einer kohärenten Demodulation bzw. Dekodierung - noch eine Phasensynchronisation an. Für diese Synchronisation wird im Folgenden die Signalauswertevorrichtung 12 näher beschrieben, die entsprechende Daten für die Synchronisation an die Synchronisationsvorrichtung 11 übermittelt. Für die Ermittlung der Phase ist vorgesehen, dass jedes Pilotsymbol der Pilotsequenz des empfangenen Signals mit dem zugehörigen Referenzsymbol einer Referenzsequenz verglichen wird. Die Referenzsequenz ist dabei gleich der Pilotsequenz, die vom Sender 1 für die Erzeugung des Signals verwendet bzw. in das Signal eingefügt worden ist. Ist für jedes Pilotsymbol ein Phasenwert ermittelt worden, so wird anschließend ein Gesamtwert z. B. durch eine Mittelung, über die einzelnen Phasenwerte erzeugt. Die Referenzsequenzen sind hier in einem Datenspeicher 15 hinterlegt.

Wie zuvor erläutert, wirkt sich jedoch ein Zeitfehler zwischen dem Fenster der Filtervorrichtung 14 und dem eigentlichen Beginn des Symbols nachteilig auf die Ermittlung der Phase aus.

Durch die Mittelung über die Auswertung mehrerer Symbole zur Rauschunterdrückung wird auch eine Mittelung über die Fehler hinsichtlich des Phasenwerts durchgeführt. Daher ist vorgesehen, dass der mittlere Phasenfehler für alle Pilotsymbole bei der Synchronisierung verwendet wird. Damit der mittlere Fehler bei der Mittelung über die einzelnen Phasenwerte sich idealerweise zu Null ergibt oder zumindest sehr klein wird, wird ausgehend von den obigen Untersuchungen die Abhängigkeit des Phasenfehlers eines Symbols von den vorherigen sowie nachfolgenden Symbolen beachtet. Die Symbole werden also derartig ausgewählt, dass sich die Phasenfehler durch Zeitversatz gerade gegenseitig kompensieren bei einer Mittelung über die einzelnen Werte der Phasen, die jeweils pro Symbol erzeugt werden.

Da mehrere Pilotsymbole nacheinander übertragen werden, lassen sich das vorherige und das folgende Symbol (also die Symbole, die bei dem Beispiel der Fig. 2 unmittelbar ein mittleres bzw. für die Auswertung betrachtetes Symbol flankieren) festlegen, bzw. sind diese dem Empfänger bekannt. Um den Phasenfehler durch die einzelnen Pilotsymbole insgesamt zu kompensieren, wird für jedes Symbol, auf dem ein Phasenfehler auftreten kann, ein zweites übertragen, welches den entgegengesetzten Fehler (bei gleichem Zeitversatz) aufweist. Dies gilt hier für die Symbole eines Signals, das eine Pilotsequenz trägt. In einer alternativen Ausgestaltung mitteln sich die Phasenfehler über die Teil-Pilotsequenzen mehrere Signale, die insbesondere Telegramm-Fragmente sind.

In einer Ausgestaltung ist daher vorgesehen, dass die Länge der Pilotsequenz ein Vielfaches der Länge von Zwei besitzen, damit eine gerade Anzahl an Additionen für die Mittelung entsteht.

Der Effekt sei an einem Beispiel erläutert.

Ist die Sequenz aus Fig. 2 ein Teil der Pilotsequenz, so wird bei einem Zeitversatz ein positiver Phasenoffset erzeugt, der sowohl für positive als auch für negative Zeitversätze gilt. Um diesen Offset zu korrigieren, muss ebenfalls ein Symbol übertragen werden, bei dem der Fehler in der gleichen Höhe einen negativen Phasenfehler ausweist.

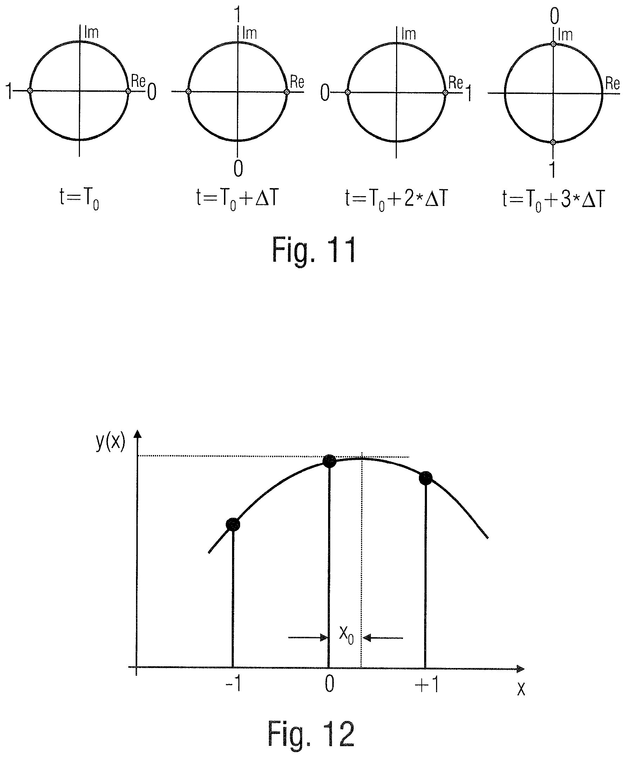

Die Fig. 11 zeigt die Abbildungsvorschrift der MSK-Modulation. Gezeigt sind dabei die möglichen Konstellationspunkte der MSK mit precoding (in MATLAB auch als non-diff MSK bekannt).

Die auszusendenden Symbole werden hierbei in Gruppen von vier Symbolen gegliedert, wobei das erste Symbol zum Zeitpunkt $T_0$ ausgesendet wird. Entsprechend wird im Zeitpunkt T0 für eine binäre Null der Konstellationspunkt +1 + 0j und für eine binäre Eins der Konstellationspunkt -1 + 0j gewählt. Für das folgende Symbol wird der Zeitpunkt $T_0 + \Delta T$ gewählt. Die Konstellationspunkte ergeben sich damit zu 0 + 1j (binäre Eins) und 0 - 1j (binäre Null). Für die beiden folgenden Zeitpunkte erfolgt die Berechnung der Konstellationspunkte in der gleichen Weise. Nachdem vier Symbole auf die Konstellationspunkte gemappt wurden, wird wieder beim Zeitpunkt $T_0$ begonnen.

Für eine Pilotsequenz-Länge von acht Symbolen und der zuvor beschriebenen MSK-Abbildungsvorschrift ergeben sich folgende Sequenzen, die sowohl eine gute Autokorrelation als auch einen Phasenfehler von nahe Null infolge eines Zeitversatzes aufweisen.

| Fortlaufende Nummer | Abfolge der Symbole | Anmerkung |
|---|---|---|
| 0 | [0, 1, 0, 0, 0, 0, 1, 0] | |
| 1 | [1, 0, 1, 1, 1, 1, 0, 1] | Invertierte bzw. gespiegelte Sequenz 0. |
| 2 | [0, 0, 0, 1, 0, 1, 1, 1] | |
| 3 | [1, 1, 1, 0, 1, 0, 0, 0] | Invertierte bzw. gespiegelte Sequenz 2. |

Daher ist die Pilotsequenz, mit der der Sender 1 die Signale aussendet, derartig definiert, dass die Summe

EP 3 610 617 B1

der Phasenoffsets bei einer Zeitverschiebung minimiert wird.

Für eine Pilotsequenz-Länge von zwölf Symbolen und der zuvor beschriebenen MSK-Abbildungsvorschrift wurden folgende Sequenzen gefunden, die sowohl eine gute Autokorrelation als auch einen Phasenfehler von nahe Null unter Zeitoffset aufweisen.

| Fortlaufende Nummer | Abfolge der Symbole in Bits | $|\varepsilon_v|$ max |
|---|---|---|
| 0 | [0, 0, 0, 0, 0, 1, 1, 0, 1, 0, 1, 1] | 0.0132892511307 |
| 1 | [0, 0, 0, 1, 0, 0, 0, 0, 1, 0, 1, 1] | 0.00604862976372 |
| 2 | [0, 0, 0, 1, 0, 1, 0, 0, 1, 1, 1, 1] | 0.00669831471134 |
| 3 | [0, 0, 0, 1, 0, 1, 1, 1, 0, 1, 1] | 0.00214046117234 |
| 4 | [0, 0, 0, 1, 1, 0, 1, 0, 1, 1, 1, 1] | 0.00228803319793 |
| 5 | [0, 1, 0, 0, 0, 0, 1, 0, 1, 1, 1, 0] | 0.00214191618191 |
| 6 | [0, 1, 0, 0, 1, 1, 1, 1, 0, 1, 0] | 0.00228803319793 |
| 7 | [0, 1, 0, 1, 0, 0, 1, 1, 1, 1, 1, 0] | 0.0132920410548 |
| 8 | [0, 1, 0, 1, 1, 1, 1, 1, 0, 0, 1, 0] | 0.00228488288132 |
| 9 | [0, 1, 1, 1, 0, 1, 0, 0, 0, 0, 1, 0] | 0.00214482669223 |
| 10 | [0, 1, 1, 1, 1, 0, 1, 0, 0, 0, 1, 0] | 0.00604466832967 |
| 11 | [1, 0, 0, 0, 0, 1, 0, 1, 1, 1, 0, 1] | 0.00604862889634 |
| 12 | [1, 0, 1, 0, 0, 0, 0, 0, 1, 1, 0, 1] | 0.00229275981363 |
| 13 | [1, 0, 1, 0, 0, 0, 1, 0, 0, 0, 0, 1] | 0.0089182616364 |
| 14 | [1, 0, 1, 0, 1, 1, 0, 0, 0, 0, 0, 1] | 0.0132892511307 |
| 15 | [1, 0, 1, 1, 0, 0, 0, 0, 0, 1, 0, 1] | 0.00229275939358 |
| 16 | [1, 0, 1, 1, 1, 0, 1, 0, 0, 0, 0, 1] | 0.0060426888597 |
| 17 | [1, 0, 1, 1, 1, 1, 1, 0, 0, 1, 0, 1] | 0.00670003795849 |
| 18 | [1, 1, 0, 1, 0, 0, 0, 0, 1, 0, 0, 0] | 0.00604466832967 |
| 19 | [1, 1, 0, 1, 1, 1, 1, 0, 1, 0, 0, 0] | 0.00214046162904 |
| 20 | [1, 1, 1, 0, 0, 1, 0, 1, 0, 0, 0, 0] | 0.00228645779938 |
| 21 | [1, 1, 1, 0, 1, 0, 0, 0, 0, 1, 0, 0] | 0.00214191618191 |
| 22 | [1, 1, 1, 0, 1, 0, 0, 0, 1, 0, 0, 0] | 0.00229295513208 |
| 23 | [1, 1, 1, 0, 1, 0, 1, 1, 0, 0, 0, 0] | 0.00669917633491 |
| 24 | [1, 1, 1, 0, 1, 1, 1, 1, 0, 1, 0, 0] | 0.0060426888597 |
| 25 | [1, 1, 1 1, 1, 0, 0, 1, 0, 1, 0, 0] | 0.0132808813584 |
| 26 | [1, 1, 1, 1, 1, 0, 1, 0, 1, 1, 0, 0] | 0.00855923745514 |

Die Nullen und Einsen sind dabei jeweils die Pilotsequenz-Bits, die durch ein entsprechendes Mapping die Symbole der Pilotsequenz bzw. der Teil-Pilotsequenz ergeben.

Dabei ist der Wert $|\varepsilon_v|_{max}$ die maximale systematische Frequenzschätzablage unter Verwendung einer Korrelation, wobei ein Abtastzeitfehler von -0.25T bis +0.25T und eine Frequenzablage von vT des Empfangssignals zwischen -0.05 bis +0.05 berücksichtigt wurde.

Die Fig. 12 zeigt ein Polynom zweiten Grades der Form $y(x) = y_0 - c(x-x_0)^2$ v, wie es bei Ausgestaltungen zur Verbesserung der Zeit- und/oder Frequenzschätzung mittels Interpolation beschrieben worden ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben

17

wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC oder beispielsweise ein Mikroprozessor, z. B. in Form einer ARM-Architektur.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Referenzen

[1] Z. Y. Choi and Y. H. Lee, "Frame synchronization in the presence of frequency offset," Communications, IEEE Transactions on, vol. 50, no. 7, pp. 1062-1065, 2002.

[2] Sust, M.K. ; Kaufmann, R. F. ; Molitor, F. ; Bjornstrom, G.A.: Rapid acquisition concept for voice activated CDMA communication. In: IEEE Global Telecommunications Conference, 1990 Bd. 3, 1990, S. 1820#1826

[3] Internationale Patentanmeldung "Optimized Preamble and Methods for Interference Robust Packet Detection for Telemetry Applications" (PCT/EP2016/057014)

[4] G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013

[5] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015.

[6] Wolfgang Koch, Skript zum Seminar Empfängersynchronisation am Fraunhofer IIS, 10.06.2015 - 15.06.2015

[7] Uwe Lambrette, Ralf Mehlan and Heinrich Meyr, Comparison of Demodulation Techniques for MSK, RWTH Aachen, https://www.ice.rwth-aachen.de/fileadmin/publications/Lambrette95TIRR.pdf, last retrieved: 19.09.2016

[8] Kay, Steven M.: Fundamentals of Statistical Signal Processing: Detection theory. Upper Saddle River, NJ : Prentice Hall PTR, 1998. ISBN 9780135041352

[9] Umberto Mengali, Aldo N. D'Andrea: "Synchronization Techniques for Digital Receivers" Plenum Press, 1997, ISBN 0-306-45725-3

[10] Walter Kellermann: "Digital Signal Processing", Vorlesungsskript vom WS 2016/17, Lehrstuhl für Multimediakommunikation und Signalverarbeitung (LMS) der Friedrich-Alexander-Universität Erlangen-Nürnberg.

[11] Steven M. Kay: "Fundamentals of Statistical Signal Processing - Vol. 2: Detection Theory", Prentice Hall, 1998, ISBN: 0-13-345711-7

[12] Z. Y. Choi and Y. H. Lee, "Frame synchronization in the presence of frequency offset", IEEE Transactions on Communications, vol. 50, no. 7, pp. 1062-1065, 2002.

**Patentansprüche**

1. Sender (1),
   wobei der Sender (1) derartig ausgestaltet ist, mindestens ein Signal mit einer mehrere Pilotsymbole aufweisenden Pilotsequenz auszusenden,
   wobei der Sender (1) einen Signalgenerator aufweist, der die Pilotsequenz bereitstellt,
   wobei der Signalgenerator die Pilotsequenz mit einer Länge von mindestens acht oder zwölf Pilotsymbolen derartig bereitstellt, sodass die Pilotsequenz eine der folgenden Formen aufweist oder sodass ein Abschnitt der Pilotsequenz, der einfach oder mehrfach Teil der Pilotsequenz ist, eine der folgenden Formen aufweist:

   [0, 1, 0, 0, 0, 0, 1, 0],
   [1, 0, 1, 1, 1, 1, 0, 1],
   [0, 0, 0, 1, 0, 1, 1, 1],
   [1, 1, 1, 0, 1, 0, 0, 0],
   [0, 0, 0, 0, 0, 1, 1, 0, 1, 0, 1, 1],
   [0, 0, 0, 1, 0, 0, 0, 0, 1, 0, 1, 1],

[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0,1, 0, 0, 0, 0,1, 0,1, 1,1, 0],
[0, 1, 0, 0, 1, 1, 1, 1, 1, 0, 1, 0],
[0, 1, 0, 1, 0, 0, 1, 1, 1, 1, 1, 0],
[0, 1, 0, 1, 1, 1, 1, 1, 0, 0, 1, 0],
[0, 1, 1, 1, 0, 1, 0, 0, 0, 0, 1, 0],
[0,1, 1, 1,1, 0,1, 0, 0, 0, 1, 0],
[1, 0, 0, 0, 0, 1, 0, 1, 1, 1, 0, 1],
[1, 0, 1, 0, 0, 0, 0, 0, 1, 1, 0, 1],
[1, 0, 1, 0, 0, 0, 1, 0, 0, 0, 0, 1],
[1, 0, 1, 0, 1, 1, 0, 0, 0, 0, 0, 1],
[1, 0, 1, 1, 0, 0, 0, 0, 0, 1, 0, 1],
[1, 0, 1, 1, 1, 0, 1, 0, 0, 0, 0, 1],
[1, 0, 1, 1, 1, 1, 1, 0, 0, 1, 0, 1],
[1, 1, 0, 1, 0,0,0, 0, 1, 0, 0, 0],
[1, 1, 0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0] oder
[1, 1, 1, 1, 1, 0, 1, 0, 1, 1, 0, 0],

wobei die Nullen und Einsen jeweils Pilotsequenz-Bits vor einer Modulation sind.

2. Sender (1) nach Anspruch 1,
wobei sich die Pilotsequenz durch eine MSK-Modulation oder GMSK-Modulation ergibt.

3. Sender (1) nach Anspruch 1,
wobei der Signalgenerator (2) die Pilotsequenz derartig bereitstellt, dass die Pilotsequenz mindestens zwei Symbol-Gruppen mit jeweils mindestens zwei Pilotsymbolen aufweist, und
wobei die Symbol-Gruppen bei einer Auswertung eines in Folge der Aussendung des Signals von einem Empfänger (10) empfangenen Signals im Hinblick auf eine Phase von einem Zeitversatz zwischen einem Referenz-Zeitpunkt der Aussendung des Signals durch den Sender (1) und einem für die Auswertung für den Referenz-Zeitpunkt angenommenen und/oder geschätzten Wert abhängige Phasenfehler erzeugen, die sich bei der Auswertung gemeinsam über die Symbol-Gruppen hinweg im Wesentlichen gegenseitig kompensieren.

4. Sender (1) nach Anspruch 3, wobei der Sender (1) derartig ausgestaltet ist, Signale auszusenden, die Pilotsequenzen aufweisen, die sich durch eine MSK-Modulation oder eine GMSK-Modulation ergeben.

5. Sender (1),
wobei der Sender (1) derartig ausgestaltet ist, mindestens zwei Signale mit jeweils einer mehrere Pilotsymbole aufweisenden Teil-Pilotsequenz auszusenden,
wobei der Sender (1) einen Signalgenerator (2) aufweist,
wobei der Signalgenerator (2) die Teil-Pilotsequenz bereitstellt,
wobei der Signalgenerator (2) die Teil-Pilotsequenzen der Signale derartig bereitstellt, dass die Teil-Pilotsequenzen jeweils mindestens eine Symbol-Gruppe mit mindestens zwei Pilotsymbolen aufweisen, und
wobei die Symbol-Gruppen der Signale bei einer Auswertung von in Folge der Aussendung der Signale von einem Empfänger (10) empfangenen Signale im Hinblick auf eine Phase von einem Zeitversatz zwischen einem Referenz-Zeitpunkt der jeweiligen Aussendung eines Signals und einem für die Auswertung für den Referenz-Zeitpunkt angenommenen und/oder geschätzten Wert abhängige Phasenfehler erzeugen, die sich bei der Auswertung gemeinsam über die Signale im Wesentlichen gegenseitig kompensieren,
wobei der Signalgenerator (2) die Teil-Pilotsequenzen derartig bereitstellt, sodass die Teil-Pilotsequenzen zusammengenommen einen Abschnitt aufweisen, der einfach oder mehrfach vorhanden ist und der folgenden Formen aufweist:

[0, 1, 0, 0, 0, 0, 1, 0],
[1, 0, 1, 1, 1, 1, 0, 1],
[0, 0, 0, 1, 0, 1, 1, 1],
[1, 1, 1, 0, 1, 0, 0, 0],
[0, 0, 0, 0, 0, 1, 1, 0, 1, 0, 1, 1],
[0, 0, 0, 1, 0, 0, 0, 0, 1, 0, 1, 1],
[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0, 1, 0, 0, 0, 0, 1, 0, 1, 1, 1, 0],
[0, 1, 0, 0, 1, 1, 1, 1, 1, 0, 1, 0],
[0, 1, 0,1, 0, 0,1, 1, 1, 1, 0],
[0, 1, 0, 1, 1, 1, 1, 1, 0, 0, 1, 0],
[0, 1, 1, 1, 0, 1, 0, 0, 0, 0, 1, 0],
[0, 1, 1, 1, 1, 0, 1, 0, 0, 0, 1, 0],
[1, 0, 0, 0, 0, 1, 0, 1, 1, 1, 0, 1],
[1, 0, 1, 0, 0, 0, 0, 0, 1, 1, 0, 1],
[1, 0, 1, 0, 0, 1, 0, 0, 0, 0, 1],
[1, 0, 1, 0, 1, 1, 0, 0, 0, 0, 0, 1],
[1, 0, 1, 1, 0, 0, 0, 0, 0, 1, 0, 1],
[1, 0, 1, 1, 1, 0, 1, 0, 0, 0, 0, 1],
[1, 0, 1, 1, 1, 1, 1, 0, 0, 1, 0, 1],
[1, 1, 0, 1, 0, 0, 0, 0, 1, 0, 0, 0],
[1, 1, 0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0] oder
[1, 1, 1, 1, 1, 0, 1, 0, 1, 1, 0, 0],

wobei die Nullen und Einsen jeweils Pilotsequenz-Bits vor einer Modulation sind.

6. Sender (1) nach Anspruch 5, wobei der Sender (1) derartig ausgestaltet ist, Signale auszusenden, die Teil-Pilotsequenzen aufweisen, die sich durch eine MSK-Modulation oder eine GMSK-Modulation ergeben.

7. Verfahren zum Aussenden von Signalen,
wobei mindestens ein Signal mit einer mehrere Pilotsymbole aufweisenden Pilotsequenz ausgesendet werden,
wobei die Pilotsequenz bereitgestellt wird,
wobei die Pilotsequenz mit einer Länge von mindestens acht oder zwölf Pilotsymbolen derartig bereitstellt wird, sodass die Pilotsequenz eine der folgenden Formen aufweist oder sodass ein Abschnitt der Pilotsequenz, der einfach oder mehrfach Teil der Pilotsequenz ist, eine der folgenden Formen aufweist:

[0, 1, 0, 0, 0, 0, 1, 0],
[1, 0, 1, 1, 1, 1, 0, 1],
[0, 0, 0, 1, 0, 1, 1, 1],
[1, 1, 1, 0, 1, 0, 0, 0],
[0, 0, 0, 0, 0, 1, 1, 0, 1, 0, 1, 1],
[0, 0, 0, 1, 0, 0, 0, 0, 1, 0, 1, 1],
[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0, 1, 0, 0, 0, 0, 1, 0, 1, 1, 1, 0],
[0, 1, 0, 0, 1, 1, 1, 1, 1, 0, 1, 0],
[0, 1, 0,1, 0, 0,1, 1, 1, 1,1, 0],
[0,1,0,1,1,1,1,0, 0,1,0],
[0, 1, 1, 1, 0, 1,0, 0, 0, 0, 1, 0],

[0, 1, 1, 1, 1, 0, 1, 0, 0, 0, 1, 0],
[1, 0, 0, 0, 0, 1, 0, 1, 1, 1, 0, 1],
[1, 0, 1, 0, 0, 0, 0, 0, 1, 1, 0, 1],
[1, 0, 1, 0, 0, 0, 1, 0, 0, 0, 0, 1],
[1, 0, 1, 0, 1, 1, 0, 0, 0, 0, 0, 1],
[1, 0, 1, 1, 0, 0, 0, 0, 0, 1, 0, 1],
[1, 0, 1, 1, 1, 0, 1, 0, 0, 0, 0, 1],
[1, 0, 1, 1, 1, 1, 1, 0, 0, 1, 0, 1],
[1, 1, 0, 1, 0, 0, 0, 0, 1, 0, 0, 0],
[1, 1, 0, 1, 1, 1, 0, 1, 0, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0] oder
[1, 1, 1, 1, 1, 0, 1, 0, 1, 1, 0, 0],

wobei die Nullen und Einsen jeweils Pilotsequenz-Bits vor einer Modulation sind.

8. Verfahren nach Anspruch 7,
   wobei die Signale mit jeweils einer mehrere Pilotsequenz-Symbole aufweisenden Pilotsequenz ausgesendet werden,
   wobei die Pilotsequenzen derartig bereitgestellt werden, dass die Pilotsequenzen jeweils mindestens zwei Symbol-Gruppen mit jeweils mindestens zwei Pilotsymbolen aufweisen, und
   wobei die Symbol-Gruppen bei einer Auswertung eines in Folge der Aussendung des Signals von einem Empfänger (10) empfangenen Signals im Hinblick auf eine Phase von einem Zeitversatz zwischen einem Referenz-Zeitpunkt einer Aussendung des Signals und einem für die Auswertung für den Referenz-Zeitpunkt angenommenen und/oder geschätzten Wert abhängige Phasenfehler erzeugen, die sich bei der Auswertung über die Symbol-Gruppen im Wesentlichen gegenseitig kompensieren.

9. Verfahren zum Aussenden von Signalen,
   wobei mindestens zwei Signale mit jeweils einer mehrere Pilotsequenz-Symbole aufweisenden Teil-Pilotsequenz ausgesendet werden,
   wobei die Teil-Pilotsequenzen derartig bereitgestellt werden, dass die Teil-Pilotsequenz jeweils mindestens eine Symbol-Gruppe mit jeweils mindestens zwei Pilotsymbolen aufweisen, und
   wobei die Symbol-Gruppen der Signale bei einer Auswertung von in Folge der Aussendung der Signale von einem Empfänger (10) empfangenen Signalen im Hinblick auf eine Phase von einem Zeitversatz zwischen einem Referenz-Zeitpunkt der jeweiligen Aussendung eines Signals und einem für die Auswertung für den Referenz-Zeitpunkt angenommenen und/oder geschätzten Wert abhängige Phasenfehler erzeugen, die sich bei der Auswertung gemeinsam über die Signale im Wesentlichen gegenseitig kompensieren,
   wobei der Signalgenerator (2) die Teil-Pilotsequenzen derartig bereitstellt, sodass die Teil-Pilotsequenzen zusammengenommen einen Abschnitt aufweisen, der einfach oder mehrfach vorhanden ist und der folgenden Formen aufweist:

   [0, 1, 0, 0, 0, 0, 1, 0],
   [1, 0, 1, 1, 1, 1, 0, 1],
   [0, 0, 0, 1, 0, 1, 1, 1],
   [1, 1, 1, 0, 1, 0, 0, 0],
   [0, 0, 0, 0, 0, 1, 1, 0, 1, 0, 1, 1],
   [0, 0, 0, 1, 0, 0, 0, 0, 1, 0, 1, 1],
   [0, 0, 0, 1, 0, 1, 0, 0, 1, 1, 1, 1],
   [0, 0, 0, 1, 0, 1, 1, 1, 1, 0, 1, 1],
   [0, 0, 0, 1, 1, 0, 1, 0, 1, 1, 1, 1],
   [0, 1, 0, 0, 0, 0, 1, 0, 1, 1, 1, 0],
   [0, 1, 0, 0, 1, 1, 1, 1, 1, 0, 1, 0],
   [0, 1, 0, 1, 0, 0, 1, 1, 1, 1, 1, 0],
   [0, 1, 0, 1, 1, 1, 1, 1, 0, 0, 1, 0],

[0, 1, 1, 1, 0, 1, 0, 0, 0, 0, 1, 0],
[0, 1, 1, 1, 1, 0, 1, 0, 0, 0, 1, 0],
[1, 0, 0, 0, 0, 1, 0, 1, 1, 1, 0, 1],
[1, 0, 1, 0, 0, 0, 0, 0, 1, 1, 0, 1],
[1, 0, 1, 0, 0, 0, 1, 0, 0, 0, 0, 1],
[1, 0, 1, 0, 1, 1, 0, 0, 0, 0, 0, 1],
[1, 0, 1, 1, 0, 0, 0, 0, 0, 1, 0, 1],
[1, 0, 1, 1, 1, 0, 1, 0, 0, 0, 0, 1],
[1, 0, 1, 1, 1, 1, 1, 0, 0, 1, 0, 1],
[1, 1, 0, 1, 0, 0, 0, 0, 1, 0, 0, 0],
[1, 1, 0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0] oder
[1, 1, 1, 1, 1, 0, 1, 0, 1, 1, 0, 0],

wobei die Nullen und Einsen jeweils Pilotsequenz-Bits vor einer Modulation sind.

**10.** Computerprogramm mit einem Programmcode zur Durchführung des Verfahrens nach Anspruch 8 oder 9.

## Claims

**1.** Transmitter (1),
wherein the transmitter (1) is configured to transmit at least one signal with a pilot sequence comprising several pilot symbols,
wherein the transmitter (1) comprises a signal generator providing the pilot sequence,
wherein the signal generator provides the pilot sequence having a length of at least eight or twelve pilot symbols such that the pilot sequence has one of the following forms or such that a portion of the pilot sequence which is one or more times part of the pilot sequence has one of the following forms:

[0, 1, 0, 0, 0, 0, 1, 0],
[1, 0, 1, 1, 1, 1, 0, 1],
[0, 0, 0, 1, 0, 1, 1, 1]
[1, 1, 1, 0, 1, 0, 0, 0],
[0, 0, 0, 0, 0, 1, 1, 0, 1, 0, 1, 1],
[0, 0, 0, 1, 0, 0, 0, 0, 1, 0, 1, 1],
[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0, 1, 0, 0, 0, 0, 1, 0, 1, 1, 1, 0],
[0, 1, 0, 0, 1, 1, 1, 1, 1, 0, 1, 0],
[0, 1, 0, 1, 0, 0, 1, 1, 1, 1, 1, 0],
[0, 1, 0, 1, 1, 1, 1, 1, 0, 0, 1, 0],
[0, 1, 1, 1, 0, 1, 0, 0, 0, 0, 1, 0],
[0, 1, 1, 1, 1, 0, 1, 0, 0, 0, 1, 0],
[1, 0, 0, 0, 0, 1, 0, 1, 1, 1, 0, 1],
[1, 0, 1, 0, 0, 0, 0, 0, 1, 1, 0, 1],
[1, 0, 1, 0, 0, 0, 1, 0, 0, 0, 0, 1],
[1, 0, 1, 0, 1, 1, 0, 0, 0, 0, 0, 1],
[1, 0, 1, 1, 0, 0, 0, 0, 0, 1, 0, 1],
[1, 0, 1, 1, 1, 0, 1, 0, 0, 0, 0, 1],
[1, 0, 1, 1, 1, 1, 1, 0, 0, 1, 0, 1],
[1, 1, 0, 1, 0, 0, 0, 0, 1, 0, 0, 0],
[1, 1, 0, 1, 1, 1, 1, 0, 1, 0, 0, 0],

[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0] or
[1, 1, 1, 1, 1, 0, 1, 0, 1, 1, 0, 0],

wherein the zeros and ones are each pilot sequence bits prior to a modulation.

2.  Transmitter (1) as claimed in claim 1,
    wherein the pilot sequence results from MSK modulation or GMSK modulation.

3.  Transmitter (1) as claimed in claim 1
    wherein the signal generator (2) provides the pilot sequence such that the pilot sequence comprises at least two symbol groups with at least two pilot symbols each, and
    wherein the symbol groups generate phase errors which are dependent on a time offset between a reference point in time of the transmission of the signal by the transmitter (1) and a value assumed and/or estimated for the evaluation for the reference point in time during an evaluation of a signal received from a receiver (10) as a result of the transmission of the signal with respect to a phase, said phase errors substantially compensating each other during the evaluation jointly across the symbol groups.

4.  Transmitter (1) as claimed in claim 3, wherein the transmitter (1) is configured to transmit signals comprising pilot sequences resulting from MSK modulation or GMSK modulation.

5.  Transmitter (1),
    wherein the transmitter (1) is configured to transmit at least two signals each comprising a subpilot sequence having a plurality of pilot symbols,
    wherein the transmitter (1) comprises a signal generator (2),
    wherein the signal generator (2) provides the subpilot sequence,
    wherein the signal generator (2) provides the subpilot sequences of the signals such that the subpilot sequences each have at least one symbol group with at least two pilot symbols, and
    wherein the symbol groups of the signals generate phase errors which are dependent on a time offset between a reference point in time of the transmission of a signal and a value assumed and/or estimated for the evaluation for the reference point in time during an evaluation of signals received from a receiver (10) as a result of the transmission of the signals with respect to a phase, said phase errors substantially compensating each other during the evaluation jointly across the signals,
    wherein the signal generator (2) provides the subpilot sequences so that the subpilot sequences altogether have a portion which is present in single or multiple form and has the following forms:

    [0, 1, 0, 0, 0, 0, 1, 0],
    [1, 0, 1, 1, 1, 1, 0, 1],
    [0, 0, 0, 1, 0, 1, 1, 1]
    [1, 1, 1, 0, 1, 0, 0, 0],
    [0, 0, 0, 0, 0, 1, 1, 0, 1, 0, 1, 1],
    [0, 0, 0, 1, 0, 0, 0, 0, 1, 0, 1, 1],
    [0, 0, 0, 1, 0, 1, 0, 0, 1, 1, 1, 1],
    [0, 0, 0, 1, 0, 1, 1, 1, 1, 0, 1, 1],
    [0, 0, 0, 1, 1, 0, 1, 0, 1, 1, 1, 1],
    [0, 1, 0, 0, 0, 0, 1, 0, 1, 1, 1, 0],
    [0, 1, 0, 0, 1, 1, 1, 1, 1, 0, 1, 0],
    [0, 1, 0, 1, 0, 0, 1, 1, 1, 1, 1, 0],
    [0, 1, 0, 1, 1, 1, 1, 1, 0, 0, 1, 0],
    [0, 1, 1, 1, 0, 1, 0, 0, 0, 0, 1, 0],
    [0, 1, 1, 1, 1, 0, 1, 0, 0, 0, 1, 0],
    [1, 0, 0, 0, 0, 1, 0, 1, 1, 1, 0, 1],
    [1, 0, 1, 0, 0, 0, 0, 0, 1, 1, 0, 1],
    [1, 0, 1, 0, 0, 0, 1, 0, 0, 0, 0, 1],

[1, 0, 1, 0, 1, 1, 0, 0, 0, 0, 0, 1],
[1, 0, 1, 1, 0, 0, 0, 0, 0, 1, 0, 1],
[1, 0, 1, 1, 1, 0, 1, 0, 0, 0, 0, 1],
[1, 0, 1, 1, 1, 1, 1, 0, 0, 1, 0, 1],
[1, 1, 0, 1, 0, 0, 0, 0, 1, 0, 0, 0],
[1, 1, 0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0] or
[1, 1, 1, 1, 1, 0, 1, 0, 1, 1, 0, 0],

wherein the zeros and ones are each pilot sequence bits prior to a modulation.

6. Transmitter (1) as claimed in claim 5, wherein the transmitter (1) is configured to transmit signals comprising pilot sequences resulting from MSK modulation or GMSK modulation.

7. Method for transmitting signals,
wherein at least one signal is transmitted with a pilot sequence comprising a plurality of pilot symbols,
wherein the pilot sequence is provided,
wherein the pilot sequence having a length of at least eight or twelve pilot symbols is provided such that the pilot sequence has one of the following forms or such that a portion of the pilot sequence which is one or more times part of the pilot sequence has one of the following forms:

[0, 1, 0, 0, 0, 0, 1, 0],
[1, 0, 1, 1, 1, 1, 0, 1],
[0, 0, 0, 1, 0, 1, 1, 1]
[1, 1, 1, 0, 1, 0, 0, 0],
[0, 0, 0, 0, 0, 1, 1, 0, 1, 0, 1, 1],
[0, 0, 0, 1, 0, 0, 0, 0, 1, 0, 1, 1],
[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0, 1, 0, 0, 0, 0, 1, 0, 1, 1, 1, 0],
[0, 1, 0, 0, 1, 1, 1, 1, 1, 0, 1, 0],
[0, 1, 0, 1, 0, 0, 1, 1, 1, 1, 1, 0],
[0, 1, 0, 1, 1, 1, 1, 1, 0, 0, 1, 0],
[0, 1, 1, 1, 0, 1, 0, 0, 0, 0, 1, 0],
[0, 1, 1, 1, 1, 0, 1, 0, 0, 0, 1, 0],
[1, 0, 0, 0, 0, 1, 0, 1, 1, 1, 0, 1],
[1, 0, 1, 0, 0, 0, 0, 0, 1, 1, 0, 1],
[1, 0, 1, 0, 0, 0, 1, 0, 0, 0, 0, 1],
[1, 0, 1, 0, 1, 1, 0, 0, 0, 0, 0, 1],
[1, 0, 1, 1, 0, 0, 0, 0, 0, 1,0, 1],
[1, 0, 1, 1, 1, 0, 1, 0, 0, 0, 0, 1],
[1, 0, 1, 1, 1, 1, 1, 0, 0, 1, 0, 1],
[1, 1, 0, 1, 0, 0, 0, 0, 1, 0, 0, 0],
[1, 1, 0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1,1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0] or
[1, 1, 1, 1, 1, 0, 1, 0, 1, 1, 0, 0],

wherein the zeros and ones are each pilot sequence bits prior to a modulation.

8. Method as claimed in claim 7,
   wherein the signals are transmitted each with a pilot sequence comprising a plurality of pilot sequence symbols, wherein the pilot sequences are provided such that the pilot sequences each comprise at least two symbol groups each having at least two pilot symbols, and wherein the symbol groups generate phase errors which are dependent on a time offset between a reference point in time of the transmission of a signal and a value assumed and/or estimated for the evaluation for the reference point in time during an evaluation of signals received from a receiver (10) as a result of the transmission of the signals with respect to a phase, said phase errors substantially compensating each other during the evaluation jointly across the symbol groups.

9. Method for transmitting signals,
   wherein at least two signals are transmitted with a subpilot sequence comprising a plurality of pilot sequence symbols, wherein the subpilot sequences are provided such that the subpilot sequences each comprise at least one symbol group having at least two pilot symbols,
   wherein the symbol groups of the signals generate phase errors which are dependent on a time offset between a reference point in time of the transmission of a signal and a value assumed and/or estimated for the evaluation for the reference point in time during an evaluation of signals received from a receiver (10) as a result of the transmission of the signals with respect to a phase, said phase errors substantially compensating each other during the evaluation jointly across the signals, wherein the signal generator (2) provides the subpilot sequences so that the subpilot sequences altogether have a portion which is present in single or multiple form and has the following forms:

   [0, 1, 0, 0, 0, 0, 1, 0],
   [1, 0, 1, 1, 1, 1, 0, 1],
   [0, 0, 0, 1, 0, 1, 1, 1]
   [1, 1, 1, 0, 1, 0, 0, 0],
   [0, 0, 0, 0, 0, 1, 1, 0, 1, 0, 1, 1],
   [0, 0, 0, 1, 0, 0, 0, 0, 1, 0, 1, 1],
   [0, 0, 0, 1, 0, 1, 0, 0, 1, 1, 1, 1],
   [0, 0, 0, 1, 0, 1, 1, 1, 1, 0, 1, 1],
   [0, 0, 0, 1, 1, 0, 1, 0, 1, 1, 1, 1],
   [0, 1, 0, 0, 0, 0, 1, 0, 1, 1, 1, 0],
   [0, 1, 0, 0, 1, 1, 1, 1, 1, 0,1, 0],
   [0, 1, 0, 1, 0, 0, 1, 1, 1, 1,1, 0],
   [0, 1, 0, 1, 1, 1, 1, 1, 0, 0, 1, 0],
   [0, 1, 1, 1, 0, 1, 0, 0, 0, 0, 1, 0],
   [0, 1, 1, 1, 1, 0, 1, 0, 0, 0, 1, 0],
   [1, 0, 0, 0, 0, 1, 0, 1, 1, 1, 0, 1],
   [1, 0, 1, 0, 0, 0, 0, 0, 1, 1, 0, 1],
   [1, 0, 1, 0, 0, 0, 1, 0, 0, 0, 0, 1],
   [1, 0, 1, 0, 1, 1, 0, 0, 0, 0, 0, 1],
   [1, 0, 1, 1, 0, 0, 0, 0, 0, 1, 0, 1],
   [1, 0, 1, 1, 1, 0, 1, 0, 0, 0, 0, 1],
   [1, 0, 1, 1, 1, 1, 1, 0, 0, 1, 0, 1],
   [1, 1, 0, 1, 0, 0, 0, 0, 1, 0, 0, 0],
   [1, 1, 0, 1, 1, 1, 1, 0, 1, 0, 0, 0],
   [1, 1, 1, 0, 0, 1, 0, 1, 0, 0, 0, 0],
   [1, 1, 1, 0, 1, 0, 0, 0, 0, 1, 0, 0],
   [1, 1, 1, 0, 1, 0, 0, 0, 1, 0, 0, 0],
   [1, 1, 1, 0, 1, 0, 1, 1, 0, 0, 0, 0],
   [1, 1, 1, 0, 1, 1, 1, 1, 0, 1, 0, 0],
   [1, 1, 1, 1, 1, 0, 0, 1, 0, 1, 0, 0] or
   [1, 1 ,1, 1, 1, 0, 1, 0, 1, 1, 0, 0],

wherein the zeros and ones are each pilot sequence bits prior to a modulation.

10. Computer program with a program code to execute the method as claimed in claim 8 or 9.

**Revendications**

1. Emetteur (1),
dans lequel l'émetteur (1) est conçu pour émettre au moins un signal avec une séquence pilote présentant une pluralité de symboles pilotes,
dans lequel l'émetteur (1) présente un générateur de signaux qui met à disposition la séquence pilote,
dans lequel le générateur de signaux met à disposition la séquence pilote avec une longueur d'au moins huit ou douze symboles pilotes de sorte que la séquence pilote présente l'une des formes suivantes ou de sorte qu'un segment de la séquence pilote, qui fait partie de la séquence pilote une ou plusieurs fois, présente l'une des formes suivantes:

[0, 1, 0, 0, 0, 0, 1, 0],
[1, 0, 1, 1, 1, 1, 0, 1],
[0, 0, 0, 1, 0, 1, 1, 1],
[1, 1, 1, 0, 1, 0, 0, 0],
[0, 0, 0, 0, 0, 1, 1, 0, 1, 0, 1, 1],
[0, 0, 0, 1, 0, 0, 0, 0, 1, 0, 1, 1],
[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0, 1, 0, 0, 0, 0, 1, 0, 1, 1, 1, 0],
[0, 1, 0, 0, 1, 1, 1, 1, 1, 0, 1, 0],
[0, 1, 0, 1, 0, 0, 1, 1, 1, 1, 1, 0],
[0, 1, 0, 1, 1, 1, 1, 1, 0, 0, 1, 0],
[0, 1, 1, 1, 0, 1, 0, 0, 0, 0, 1, 0],
[0, 1, 1, 1, 0, 1, 0, 0, 0, 1, 0],
[1, 0, 0, 0, 0, 1, 0, 1, 1, 1, 0, 1],
[1. 0, 1, 0, 0, 0, 0, 0, 1, 1, 0, 1],
[1, 0, 1, 0, 0, 0, 1, 0, 0, 0, 0, 1],
[1, 0, 1, 0, 1, 1, 0, 0, 0, 0, 0, 1],
[1, 0, 1, 1, 0, 0, 0, 0, 0, 1, 0, 1],
[1,0, 1, 1, 1, 0, 1, 0, 0, 0, 0, 1],
[1, 0, 1, 1, 1, 1, 1, 0, 0, 1, 0, 1],
[1, 1, 0, 1, 0, 0, 0, 0, 1, 0, 0, 0],
[1, 1, 0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0], ou
[1, 1, 1, 1, 1, 0, 1, 0, 1, 1, 0, 0],

dans lequel les zéros et les uns sont, chacun, des bits de séquence pilote avant une modulation.

2. Emetteur (1) selon la revendication 1,
dans lequel la séquence pilote résulte d'une modulation MSK ou d'une modulation GMSK.

3. Emetteur (1) selon la revendication 1,
dans lequel le générateur de signaux (2) met à disposition la séquence pilote de sorte que la séquence pilote comporte au moins deux groupes de symboles avec, chacun, au moins deux symboles pilotes, et
dans lequel les groupes de symboles génèrent, lors d'une évaluation d'un signal reçu par un récepteur (10) à la suite de l'émission du signal, en ce qui concerne une phase, des erreurs de phase dépendant d'un décalage de temps entre un moment de référence de l'émission du signal par l'émetteur (1) et une valeur adoptée et/ou estimée pour l'évaluation pour le moment de référence qui, lors de l'évaluation, se compensent sensiblement entre elles sur les groupes de symboles.

4. Emetteur (1) selon la revendication 3, dans lequel l'émetteur (1) est conçu de manière à émettre des signaux qui présentent des séquences pilotes qui résultent d'une modulation MSK ou d'une modulation GMSK.

5. Emetteur (1),

dans lequel l'émetteur (1) est conçu de manière à émettre au moins deux signaux avec, chacun, une séquence pilote partielle présentant plusieurs symboles pilotes,

dans lequel l'émetteur (1) présente un générateur de signaux (2), dans lequel le générateur de signaux (2) met à disposition la séquence pilote partielle,

dans lequel le générateur de signaux (2) met à disposition les séquences pilotes partielles des signaux de sorte que les séquences pilotes partielles présentent, chacune, au moins un groupe de symboles avec au moins deux symboles pilotes, et

dans lequel les groupes de symboles des signaux génèrent, lors d'une évaluation de signaux reçus par un récepteur (10) à la suite de l'émission des signaux, en ce qui concerne une phase, des erreurs de phase dépendant d'un décalage de temps entre un moment de référence de l'émission respective d'un signal et une valeur adoptée et/ou estimée pour l'évaluation pour le moment de référence qui, lors de l'évaluation, se compensent sensiblement entre elles sur les signaux,

dans lequel le générateur de signaux (2) fournit les séquences pilotes partielles de sorte que les séquences pilotes partielles présentent, dans leur ensemble, un segment qui est présent une ou plusieurs fois et qui présente les formes suivantes:

[0, 1, 0, 0, 0, 0, 1, 0],
[1, 0, 1, 1, 1, 1, 0, 1],
[0, 0, 0, 1, 0, 1, 1, 1],
[1, 1, 1, 0, 1, 0, 0, 0],
[0, 0, 0, 0, 0, 1, 1, 0, 1, 0, 1, 1],
[0, 0, 0, 1, 0, 0, 0, 0, 1, 0, 1, 1],
[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0, 1, 0, 0, 0, 0, 1, 0, 1, 1, 1, 0],
[0, 1, 0, 0, 1, 1, 1, 1, 1, 0, 1, 0],
[0, 1, 0, 1, 0, 0, 1, 1, 1, 1, 1, 0],
[0, 1, 0, 1, 1, 1, 1, 1, 0, 0, 1, 0],
[0, 1, 1, 1, 0, 1, 0, 0, 0, 0, 1, 0],
[0, 1, 1, 1, 1, 0, 1, 0, 0, 0, 1, 0],
[1, 0, 0, 0, 0, 1, 0, 1, 1, 1, 0, 1],
[1, 0, 1, 0, 0, 0, 0, 0, 1, 1, 0, 1],
[1, 0, 1, 0, 0, 0, 1, 0, 0, 0, 0, 1],
[1,0, 1, 0, 1, 1, 0, 0, 0, 0, 0, 1],
[1, 0, 1, 1, 0, 0, 0, 0, 0, 1, 0, 1],
[1, 0, 1, 1, 1, 0, 1, 0, 0, 0, 0, 1],
[1, 0, 1, 1, 1, 1, 1, 0, 0, 1, 0, 1],
[1. 1, 0, 1, 0, 0, 0, 0, 1, 0, 0, 0],
[1, 1, 0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0], ou
[1, 1, 1, 1, 1, 0, 1, 0, 1, 1, 0, 0],

dans lequel les zéros et les uns sont, chacun, des bits de séquence pilote avant une modulation.

6. Emetteur (1) selon la revendication 5, dans lequel l'émetteur (1) est conçu de manière à émettre des signaux qui présentent des séquences pilotes partielles qui résultent d'une modulation MSK ou d'une modulation GMSK.

7. Procédé pour émettre des signaux,

dans lequel est émis au moins un signal avec une séquence pilote présentant plusieurs symboles pilotes,

dans lequel est mise à disposition la séquence pilote,

dans lequel est mise à disposition la séquence pilote d'une longueur d'au moins huit ou douze symboles pilotes de sorte que la séquence pilote présente l'une des formes suivantes ou de sorte qu'un segment de la séquence pilote, qui fait partie de la séquence pilote une ou plusieurs fois, présente l'une des formes suivantes :

[0, 1, 0, 0, 0, 0, 1, 4],
[1, 0, 1, 1, 1, 1, 0, 1],
[0, 0, 0, 1, 0, 1, 1, 1],
[1, 1, 1, 0, 1, 0, 0, 0],
[0, 0, 0, 0, 0, 1, 1, 0, 1, 0, 1, 1],
[0, 0, 0, 1, 0, 0, 0, 0, 1, 0, 1, 1],
[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0, 1, 0, 0, 0, 0, 1, 0, 1, 1, 1, 0],
[0, 1, 0, 0, 1, 1, 1, 1, 1, 0, 1, 0],
[0, 1, 0, 1, 0, 0, 1, 1, 1, 1, 1, 0],
[0, 1, 0, 1, 1, 1, 1, 0, 0, 1, 0],
[0, 1, 1, 1, 0, 1, 0, 0, 0, 0, 1, 0],
[0, 1, 1, 1, 1, 0, 1, 0, 0, 0, 1, 0],
[1,0, 0, 0, 0, 1, 0, 1, 1, 1, 0, 1],
[1, 0, 1, 0, 0, 0, 0, 0, 1, 1, 0, 1],
[1,0, 1, 0, 0, 0, 1, 0, 0, 0, 0, 1],
[1, 0, 1, 0, 1, 1, 0, 0, 0, 0, 0, 1],
[1, 0, 1, 1, 0, 0, 0, 0, 0, 1, 0, 1],
[1, 0, 1, 1, 1, 0, 1, 0, 0, 0, 0, 1],
[1, 0, 1, 1, 1, 1, 1, 0, 0, 1, 0, 1],
[1, 1, 0, 1, 0, 0, 0, 0, 1, 0, 0, 0],
[1, 1, 0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0], ou
[1, 1, 1, 1, 1, 0, 1, 0, 1, 1, 0, 0],

dans lequel les zéros et les uns sont, chacun, des bits de séquence pilote avant une modulation.

8. Procédé selon la revendication 7,

dans lequel sont émis les signaux avec, chacun, une séquence pilote présentant une pluralité de symboles de séquence pilote,

dans lequel sont mises à disposition les séquences pilotes de sorte que les séquences pilotes présentent, chacune, au moins deux groupes de symboles avec, chacun, au moins deux symboles pilotes, et

dans lequel les groupes de symboles génèrent, lors d'une évaluation d'un signal reçu par un récepteur (10) à la suite de l'émission du signal, en ce qui concerne une phase, des erreurs de phase dépendant d'un décalage de temps entre un moment de référence d'une émission du signal et une valeur adoptée et/ou estimée pour l'évaluation pour le moment de référence qui, lors de l'évaluation, se compensent sensiblement entre elles sur les groupes de symboles.

9. Procédé pour émettre des signaux,

dans lequel sont émis au moins deux signaux avec, chacun, une séquence pilote partielle présentant plusieurs symboles de séquence pilote,

dans lequel sont mises à disposition les séquences pilotes partielles de sorte que les séquences pilotes partielles présentent, chacune, au moins un groupe de symboles avec, chacun, au moins deux symboles pilotes, et

dans lequel les groupes de symboles génèrent, lors d'une évaluation de signaux reçus par un récepteur (10) à la suite de l'émission des signaux, en ce qui concerne une phase, des erreurs de phase dépendant d'un décalage de temps entre un moment de référence de l'émission respective d'un signal et une valeur adoptée et/ou estimée pour l'évaluation pour le moment de référence qui, lors de l'évaluation, se compensent sensiblement entre elles sur les signaux,

dans lequel le générateur de signaux (2) met à disposition les séquences pilotes partielles de sorte que les séquences pilotes partielles présentent, dans leur ensemble, un segment qui est présent une ou plusieurs fois et présente les formes suivantes:

[0, 1, 0, 0, 0, 0, 1, 0],
[1, 0, 1, 1, 1, 1, 0, 1],
[0, 0, 0, 1, 0, 1, 1, 1],
[1, 1, 1, 0, 1, 0, 0, 0],
[0, 0, 0, 0, 0, 1, 1, 0, 1, 0, 1, 1],
[0, 0, 0, 1, 0, 0, 0, 0, 1, 0, 1, 1],
[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0, 1, 0, 0, 0, 0, 1, 0, 1, 1, 1, 0],
[0, 1, 0, 0, 1, 1, 1, 1, 1, 0, 1, 0],
[0, 1, 0, 1, 0, 0, 1, 1, 1, 1, 1, 0],
[0, 1, 0, 1, 1, 1, 1, 0, 0, 1, 0],
[0, 1, 1, 1, 0, 1, 0, 0, 0, 0, 1, 0], [0, 1, 1, 1, 1, 0, 1, 0, 0, 0, 1, 0],
[1, 0, 0, 0, 0, 1, 0, 1, 1, 1, 0, 1],
[1, 0, 1, 0, 0, 0, 0, 0, 1, 1, 0, 1],
[1, 0, 1, 0, 0, 0, 1, 0, 0, 0, 0, 1],
[1, 0, 1, 0, 1, 1, 0, 0, 0, 0, 0, 1],
[1, 0, 1, 1, 0, 0, 0, 0, 0, 1, 0, 1],
[1, 0, 1, 1, 1, 0, 1, 0, 0, 0, 0, 1],
[1, 0, 1, 1, 1, 1, 1, 0, 0, 1, 0, 1],
1, 1, 0, 1, 0, 0, 0, 0, 1, 0, 0, 0],
[1, 1, 0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0], ou
[1, 1, 1, 1, 1, 0, 1, 0, 1, 1, 0, 0],

dans lequel les zéros et les uns sont, chacun, des bits de séquence pilote avant une modulation.

10. Programme d'ordinateur avec un code de programme pour réaliser le procédé selon la revendication 8 ou 9.

Fig. 1

EP 3 610 617 B1

Fig. 2

Fig. 3

Fig. 4

Fig. 5

Fig. 6

Fig. 7

Fig. 8

Fig. 9

Fig. 10

$t=T_0$     $t=T_0+\Delta T$     $t=T_0+2*\Delta T$     $t=T_0+3*\Delta T$

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011082098 A1
- EP 2914039 A1
- EP 2016057014 W

**In der Beschreibung aufgeführte Nicht-Patentliteratur**

- OFDM Timing and Frequency Offset Estimation Based on Repeated Training Sequence. **ZH H YU et al.** WIRELESS COMMUNICATIONS; NETWORKING AND MOBILE COMPUTING; 2007. WICOM 2007. INTERNATIONAL CONFERENCE ON. IEEE, 21. September 2007
- A novel timing estimation method for OFDM systems. **BYUNGJOON PARK et al.** IEEE COMMUNICATIONS LETTERS. IEEE SERVICE CENTER, 01. Mai 2003
- A Study of OFDM Synchronization Algorithm Based on Coaxial Cable Operating at Gigabit. **WEIBING CHEN et al.** INTELLIGENT SYSTEM DESIGN AND ENGINEERING APPLICATION (ISDEA), 2012, SECOND INTERNATIONAL CONFERENCE ON. IEEE, 06. Januar 2012
- **Z. Y. CHOI ; Y. H. LEE.** Frame synchronization in the presence of frequency offset. *Communications, IEEE Transactions on,* 2002, vol. 50 (7), 1062-1065
- **SUST, M.K. ; KAUFMANN, R. F. ; MOLITOR, F. ; BJORNSTROM, G.A.** Rapid acquisition concept for voice activated CDMA communication. *IEEE Global Telecommunications Conference,* 1990, vol. 3
- **G. KILIAN ; H. PETKOV ; R. PSIUK ; H. LIESKE ; F. BEER ; J. ROBERT ; A. HEUBERGER.** Improved coverage for low-power telemetry systems using telegram splitting. *Proceedings of 2013 European Conference on Smart Objects, Systems and Technologies (SmartSysTech),* 2013
- **G. KILIAN ; M. BREILING ; H. H. PETKOV ; H. LIESKE ; F. BEER ; J. ROBERT ; A. HEUBERGER.** Increasing Transmission Reliability for Telemetry Systems Using Telegram Splitting. *IEEE Transactions on Communications,* Marz 2015, vol. 63 (3), 949-961
- **WOLFGANG KOCH.** *Skript zum Seminar Empfängersynchronisation am Fraunhofer IIS,* 10. Juni 2015
- **UWE LAMBRETTE ; RALF MEHLAN ; HEINRICH MEYR.** Comparison of Demodulation Techniques for MSK. *RWTH Aachen,* 19. September 2016, https://www.ice.rwth-aachen.de/fileadmin/publications/Lambrette95TIRR.pdf
- Fundamentals of Statistical Signal Processing: Detection theory. **KAY, STEVEN M.** Upper Saddle River. Prentice Hall PTR, 1998
- **UMBERTO MENGALI ; ALDO N. D'ANDREA.** Synchronization Techniques for Digital Receivers. Plenum Press, 1997
- **WALTER KELLERMANN.** Vorlesungsskript vom WS 2016/17, Lehrstuhl für Multimediakommunikation und Signalverarbeitung (LMS) der Friedrich-Alexander-Universität Erlangen-Nürnberg. *Digital Signal Processing*
- **STEVEN M. KAY.** Fundamentals of Statistical Signal Processing - Vol. 2: Detection Theory. Prentice Hall, 1998, vol. 2
- **Z. Y. CHOI ; Y. H. LEE.** Frame synchronization in the presence of frequency offset. *IEEE Transactions on Communications,* 2002, vol. 50 (7), 1062-1065